# EUROPÄISCHE PATENTSCHRIFT

(11) **EP 3 031 315 B1**
(45) Veröffentlichungstag und Bekanntmachung des Hinweises auf die Patenterteilung: **01.09.2021**
(21) Anmeldenummer: 14198441.9
(22) Anmeldetag: 17.12.2014
(51) Int. Cl.: A01D 34/90

(54) **Gartengerätehandgriffvorrichtung**
Garden device handle device
Dispositif de poignée pour outils de jardinage

(30) Priorität: 09.12.2014 DE 102014225329; 09.12.2014 DE 102014225326
(43) Veröffentlichungstag der Anmeldung: 15.06.2016
(73) Patentinhaber: Robert Bosch GmbH, 70442 Stuttgart (DE)
(72) Erfinder: Gyuricza, Arpad, Stowmarket, IP14 1EY (GB); Zador, Endre, Ipswich, Suffolk (County), IP38DH (GB)

(56) Entgegenhaltungen:
- EP-A1- 1 595 661
- WO-A1-96/18067
- WO-A1-2014/008627
- DE-A1- 2 948 097
- NL-A- 7 704 333
- US-A- 4 207 675

## Beschreibung

### Stand der Technik

Es ist bereits ein System mit zumindest einer Gartengerätehandgriffvorrichtung, die an einer Gartenbearbeitungsmaschine anordenbar ist und die zumindest eine Bedieneinheit umfasst, die zumindest ein von einem Bediener betätigbares Bedienelement und zumindest ein von einem Bediener betätigbares weiteres Bedienelement aufweist, und mit zumindest einer Elektronikeinheit, die zumindest dazu vorgesehen ist, zumindest in Abhängigkeit einer Betätigung des Bedienelements und des weiteren Bedienelements zumindest eine Energieversorgung einer Antriebseinheit zu schalten, vorgeschlagen worden. Beispielsweise sei auf die Druckschriften WO96/18067 A1, DE2948097 A1, EP1595661 A1, WO2014/008627 A1 und US4207675 verwiesen.

### Offenbarung der Erfindung

Die Erfindung geht aus von einer Gartengerätehandgriffvorrichtung mit den Merkmalen des Anspruchs 1. Vorteilhafte Weiterbildungen sind den abhängigen Ansprüchen zu entnehmen.

Die Gartengerätehandgriffvorrichtung ist zumindest im Wesentlichen stabförmig ausgebildet. Die Gartengerätehandgriffvorrichtung ist abnehmbar an einer Gartenbearbeitungsmaschine anordenbar, insbesondere fixierbar. Eine Betätigung des Bedienelements und/oder des weiteren Bedienelements ist elektronisch mittels der Elektronikeinheit abfragbar und/oder erfassbar. Unter einer "Gartengerätehandgriffvorrichtung" soll in diesem Zusammenhang insbesondere eine Handgriffvorrichtung und/oder eine Zusatzhandgriffvorrichtung für eine Gartenbearbeitungsmaschine verstanden werden. Vorzugsweise soll darunter insbesondere eine Vorrichtung mit zumindest einem Handgriff verstanden werden, welche an einer Gartenbearbeitungsmaschine anordenbar ist. Bevorzugt ist die Vorrichtung dazu vorgesehen an einer Gartenbearbeitungsmaschine einen Handgriff und/oder einen Zusatzhandgriff bereitzustellen. Besonders bevorzugt ist die Gartengerätehandgriffvorrichtung unabhängig von einer Gartenbearbeitungsmaschine ausgebildet. Die Gartenbearbeitungsmaschine kann als Rasenmäher, als Rasentrimmer, als Heckenschere, als Grasschneider, als Kettensäge, als Astsäge, als Gartenkralle oder als ein anderes, einem Fachmann als sinnvoll erscheinende motorisch betreibbare Gartenbearbeitungsmaschine ausgebildet sein.

Unter einer "Bedieneinheit" soll hier insbesondere eine Einheit verstanden werden, die zumindest ein Bauteil, insbesondere das Bedienelement und/oder das weitere Bedienelement, aufweist, das direkt von einem Bediener betätigbar ist, und die dazu vorgesehen ist, durch eine Betätigung und/oder durch eine Eingabe von Parametern einen Prozess und/oder einen Zustand einer mit der Bedieneinheit gekoppelten Einheit zu beeinflussen und/oder zu ändern. Unter einem "Bedienelement" soll insbesondere ein Element verstanden werden, das dazu vorgesehen ist, bei einem Bedienvorgang eine Eingabegröße von einem Bediener aufzunehmen und insbesondere unmittelbar von einem Bediener kontaktiert zu werden, wobei ein Berühren des Bedienelements und/oder eine auf das Bedienelement ausgeübte Betätigungskraft erfasst und zur Ansteuerung einer Einheit weitergeleitet wird.

Unter einer "Elektronikeinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Unter "vorgesehen" soll insbesondere speziell ausgelegt, speziell programmiert und/oder speziell ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllt und/oder ausführt.

Darunter, dass "die Gartengerätehandgriffvorrichtung zumindest im Wesentlichen stabförmig ausgebildet ist" soll in diesem Zusammenhang insbesondere verstanden werden, dass die Gartengerätehandgriffvorrichtung ein Grundkörper mit einer Haupterstreckung aufweist, die wesentlich größer ist, als ein Umfang des Grundkörpers senkrecht zu einer Haupterstreckungsrichtung. Vorzugsweise soll darunter insbesondere verstanden werden, dass ein kleinster geometrischer Quader, welcher die Gartengerätehandgriffvorrichtung gerade noch vollständig umschließt, eine längste Seitenkante aufweist, die wesentlich größer ist, als eine zweitlängste Seitenkante. Dabei soll unter "wesentlich größer" insbesondere zumindest zweimal, vorzugsweise zumindest viermal und besonders bevorzugt zumindest sechsmal so groß verstanden werden. Unter einer "Haupterstreckungsrichtung" einer Baueinheit soll insbesondere eine Richtung verstanden werden, welche sich parallel zu einer längsten Seitenkante eines kleinsten geometrischen Quaders erstreckt, welcher die Baueinheit gerade noch vollständig umschließt.

Vorzugsweise umfassen/umfasst das Bedienelement und/oder das weitere Bedienelement einen infolge einer Betätigung des Bedienelements schaltbaren Schaltkontakt. Der Schaltkontakt des jeweiligen Bedienelements ist vorzugsweise dazu vorgesehen, ein als elektrische Kenngröße ausgebildetes Schaltsignal in Abhängigkeit einer Berührung des jeweiligen Bedienelements zu erzeugen. Das Schaltsignal ist bevorzugt an die Elektronikeinheit übermittelbar und von dieser auswertbar sowie weiterverarbeitbar. Das Bedienelement und/oder das weitere Bedienelement sind/ist vorzugsweise als resistives, als kapazitives oder als induktives Bedienelement/e ausgebildet. Die Bedieneinheit kann eine Vielzahl an Bedienelementen umfassen, die als elektronische Bedienelemente ausgebildet sind und deren jeweilige Betätigung elektronisch von der Elektronikeinheit abfragbar, insbesondere elektronisch erfassbar und elektronisch weiterverarbeitbar, sind. Es ist jedoch auch denkbar, dass zumindest eines der Bedienelemente als mechanisches Bedienelement ausgebildet ist, deren jeweilige Betätigung elektronisch von der Elektronikeinheit abfragbar, insbesondere elektronisch erfassbar und elektronisch weiterverarbeitbar, ist, wie beispielsweise mittels zumindest eines Sensorelements o. dgl.

Mittels der erfindungsgemäßen Ausgestaltung kann vorteilhaft ein System mit einer Gartengerätehandgriffvorrichtung zur Verfügung gestellt werden, das insbesondere eine besonders hohe Sicherheit gegen eine unbeabsichtigte Inbetriebnahme einer Antriebseinheit ermöglicht. Es kann vorteilhaft eine hohe Bedienersicherheit erreicht werden. Ferner kann vorteilhaft eine Gartengerätehandgriffvorrichtung zur Verfügung gestellt werden, die eine intuitive Bedienung ermöglicht. Zudem können vorteilhaft Bedienelemente genutzt werden, die hinsichtlich eines Betriebsstroms gering ausgelegt sind, da Abschaltströme der Bedienelemente gering sein können und insbesondere nicht einem Strom, der durch die Antriebseinheit fließt, entsprechen müssen.

Ferner wird vorgeschlagen, dass sich das Bedienelement und/oder das weitere Bedienelement zumindest im Wesentlichen vollständig entlang einer Umfangserstreckung der Gartengerätehandgriffvorrichtung erstreckt. Vorzugsweise erstreckt sich das Bedienelement und/oder das weitere Bedienelement, welches als elektronisches Bedienelement ausgebildet ist, das berührungsempfindlich ausgebildet ist, zumindest im Wesentlichen vollständig entlang einer Umfangserstreckung der Gartengerätehandgriffvorrichtung. Bevorzugt ist das Bedienelement und/oder das weitere Bedienelement zumindest im Wesentlichen stabförmig ausgebildet. Besonders bevorzugt weist das Bedienelement und/oder das weitere Bedienelement eine Haupterstreckung auf, die wesentlich größer als eine Handbreite ist. Unter "zumindest im Wesentlichen vollständig" soll in diesem Zusammenhang insbesondere zumindest zu 50%, vorzugsweise zumindest zu 70% und besonders bevorzugt zumindest zu 90% verstanden werden. Unter einer "Umfangserstreckung" soll in diesem Zusammenhang insbesondere eine Erstreckung der Gartengerätehandgriffvorrichtung in Umfangsrichtung, insbesondere senkrecht zu einer Haupterstreckungsrichtung der Gartengerätehandgriffvorrichtung, verstanden werden. Ferner kann das Bedienelement und/oder das weitere Bedienelement zumindest teilweise ergonomisch geformt, aktivierbar und/oder mit taktilen Flächen überzogen sein. Unter "aktivierbar" soll hier eine Anwenderrückmeldung ausgebend, wie beispielsweise ein Vibrieren und/oder Temperieren, verstanden werden. Unter "taktilen Flächen" soll insbesondere eine haftungsverbessernde Fläche und/oder eine in Endbereichen aufgeraute Fläche verstanden werden. Dadurch kann vorteilhaft ein zuverlässiges und sicheres Greifen und/oder Betätigen des Bedienelements und/oder des weiteren Bedienelements erreicht werden. Es kann vorteilhaft eine hohe Bedienersicherheit erreicht werden. Ferner kann vorteilhaft eine Gartengerätehandgriffvorrichtung zur Verfügung gestellt werden, die eine intuitive Bedienung ermöglicht.

Des Weiteren wird vorgeschlagen, dass die zumindest eine Gartengerätehandgriffvorrichtung zumindest einen Griff aufweist, an welchem das Bedienelement angeordnet ist und über welches eine Ausrichtung des Bedienelements gegenüber dem weiteren Bedienelement verändert werden kann. Vorzugsweise ist der Griff verschwenkbar ausgebildet. Besonders bevorzugt ist der Griff gegenüber einer Haupterstreckungsrichtung der Gartengerätehandgriffvorrichtung verschwenkbar. Darunter, dass "eine Ausrichtung des Bedienelements gegenüber dem weiteren Bedienelement verändert werden kann" soll in diesem Zusammenhang insbesondere verstanden werden, dass ein Winkel zwischen einer Haupterstreckungsrichtung des Bedienelements gegenüber einer Haupterstreckungsrichtung des weiteren Bedienelement insbesondere mittels des Griffs veränderbar ist. Dadurch kann vorteilhaft eine Griffhaltung der Gartengerätehandgriffvorrichtung verändert werden. Vorzugsweise kann die Griffhaltung eines Bedieners an einen aktuellen Betrieb angepasst werden. Besonders bevorzugt kann die Griffhaltung dabei beispielsweise an eine für einen Betrieb benötigte Lage der Gartengerätehandgriffvorrichtung und/oder an eine Anwendungsanforderung angepasst werden. Ferner kann vorteilhaft eine Gartengerätehandgriffvorrichtung zur Verfügung gestellt werden, die eine intuitive Bedienung ermöglicht.

Es wird ferner vorgeschlagen, dass die zumindest eine Elektronikeinheit zumindest einen Timer aufweist, der dazu vorgesehen ist, eine Dauer eines Schaltzustands des Bedienelements und/oder des weiteren Bedienelements zu überwachen. Vorzugsweise ist der Timer in zumindest einem Betriebszustand dazu vorgesehen, eine Dauer eines ausbleibenden Kontakts zwischen einem Bediener und dem Bedienelement und/oder dem weiteren Bedienelement zu überwachen. Unter einem "Timer" soll in diesem Zusammenhang insbesondere ein elektronischer Zeitmesser verstanden werden. Vorzugsweise soll darunter insbesondere ein in einem Betriebsprogramm der Elektronikeinheit integrierter elektronischer Zeitmesser verstanden werden. Hierdurch kann vorteilhaft beispielsweise eine Dauer eines Ausbleibens eines Kontakts zwischen einem Bediener und dem Bedienelement und/oder dem weiteren Bedienelement überwacht werden. Wird beispielsweise das Bedienelement und/oder das weitere Bedienelement über einen definierten Zeitraum hinweg nicht berührt, wird eine Antriebseinheit automatisch deaktiviert. Ferner kann dadurch insbesondere erreicht werden, dass die Antriebseinheit bei einem Umgreifen nicht direkt automatisch deaktiviert wird. So kann vorzugsweise abhängig von einer Dauer zumindest eine Arretierschaltfunktion oder zumindest eine Totmannschaltfunktion aktiviert werden. Unter einer "Arretierschaltfunktion" soll hier insbesondere eine Funktion verstanden werden, bei der zumindest eine Beibehaltung der Energieversorgung der Antriebseinheit nach einer Betätigung des Bedienelements und/oder des weiteren Bedienelements zumindest im Wesentlichen unabhängig ist von einem Betätigtbleiben des Bedienelements und/oder des weiteren Bedienelements. Die Arretierschaltfunktion ist vorzugsweise dazu vorgesehen, eine Beibehaltung der Energieversorgung einer Antriebseinheit elektronisch zu steuern und/oder zu regeln. Die Arretierschaltfunktion und deren Funktionsweise sind einem Fachmann zumindest im Wesentlichen als bekannt anzusehen. Der Begriff "Totmannschaltfunktion" soll hier insbesondere eine Funktion definieren, bei der insbesondere zumindest eine Energieversorgung der Antriebseinheit infolge eines Nichtvorhandenseins einer Betätigung zumindest des Bedienelements und/oder des weiteren Bedienelements unterbindbar ist. Vorzugsweise ist die Totmannschaltfunktion dazu vorgesehen, eine Energieversorgung der Antriebseinheit zu unterbrechen, sobald das Bedienelement und/oder das weitere Bedienelement nach einer erfolgten Betätigung unbetätigt sind/ist oder ein Bediener eine Berührung des Bedienelements und/oder des weiteren Bedienelements nach einer erfolgten Betätigung aufhebt, insbesondere nach Ablauf einer definierten Zeitspanne. Die Totmannschaltfunktion und deren Funktionsweise sind einem Fachmann zumindest im Wesentlichen als bekannt anzusehen. Es kann vorteilhaft ein System mit einer Gartengerätehandgriffvorrichtung zur Verfügung gestellt werden, das eine intuitive Bedienung ermöglicht. Ferner kann vorteilhaft eine hohe Bedienersicherheit erreicht werden. Ferner wäre auch denkbar, über den Timer eine Dauer zwischen zwei Betätigungen des Bedienelements und/oder des weiteren Bedienelements zu überwachen. So können vorteilhaft einfach Sicherheitsfunktionen realisiert werden.

Es wird weiter vorgeschlagen, dass die Gartengerätehandgriffvorrichtung zumindest eine Lagereinheit und zumindest ein in der zumindest einen Lagereinheit integriertes Hauptschaltelement aufweist, welches zumindest dazu vorgesehen ist, das Bedienelement und/oder das weitere Bedienelement zu aktivieren und/oder zu deaktivieren. Unter einer "Lagereinheit" soll in diesem Zusammenhang insbesondere eine Einheit verstanden werden, über welche das System oder die Gartengerätehandgriffvorrichtung zu einer Lagerung sinnvoll verstaut werden kann. Vorzugsweise soll darunter insbesondere eine Einheit verstanden werden, über welche das System oder die Gartengerätehandgriffvorrichtung zu einer Lagerung beispielsweise an einer Wand, bevorzugt an einem Haken und/oder einer Schraube, befestigt werden kann. Bevorzugt soll darunter insbesondere eine Einheit verstanden werden, die insbesondere bei einer Nutzung auf eine Lagerung rückschließen lässt. Besonders bevorzugt ist die Lagereinheit als Aufhängöffnung ausgebildet. Ganz besonders bevorzugt wirkt beim Aufhängen des Systems oder der Gartengerätehandgriffvorrichtung die Schwerkraft derart auf die Lagereinheit, dass das Hauptschaltelement das Bedienelement und/oder zumindest das weitere Bedienelement deaktiviert. Alternativ wäre jedoch auch denkbar, dass die Lagereinheit als Druckknopf ausgebildet ist, der bei einem Aufstellen auf einem Untergrund aktiviert wird. Ferner soll in diesem Zusammenhang unter einem "integrierten Hauptschaltelement" insbesondere ein Schaltelement verstanden werden, welches zumindest mit der Lagereinheit gekoppelt ist. Vorzugsweise soll darunter insbesondere ein Schaltelement verstanden werden, dessen Schaltzustand von einem Zustand, insbesondere einem Nutzungszustand der Lagereinheit, abhängig ist. Besonders bevorzugt ist ein Schaltzustand des Hauptschaltelements durch eine Nutzung und/oder Nichtnutzung der Lagereinheit definiert. Dabei soll unter einem "Hauptschaltelement" insbesondere ein Schaltelement verstanden werden, über welches eine Energieversorgung von einer Elektronik getrennt und/oder mit dieser verbunden werden kann. Vorzugsweise soll darunter ein Betriebsschalter verstanden werden. So kann vorzugsweise eine sinnvolle automatische Kopplung eines Lagerzustands an einen Betriebszustand erreicht werden. Vorzugsweise kann so erreicht werden, dass das System oder die Gartengerätehandgriffvorrichtung in einem Lagerzustand automatisch deaktiviert wird. Insbesondere kann so auf eine manuelle Deaktivierung verzichtet werden. Es kann zuverlässig erreicht werden, dass sich das System oder die Gartengerätehandgriffvorrichtung bei einer Lagerung nicht in einem Standby-Betrieb und/oder einem Arbeitsbetrieb befindet. Es kann vorteilhaft eine hohe Bedienersicherheit erreicht werden. Ferner kann vorteilhaft eine Gartengerätehandgriffvorrichtung zur Verfügung gestellt werden, die eine intuitive Bedienung ermöglicht.

Ferner wird vorgeschlagen, dass das die Gartengerätehandgriffvorrichtung zumindest eine mit der zumindest einen Elektronikeinheit verbundene Sensoreinheit, mit zumindest einem Kraftsensor, Wegesensor und/oder Bewegungsgeschwindigkeitssensor zu einer Erfassung einer von einem Bediener auf die Gartengerätehandgriffvorrichtung ausgeübten Kraft, aufweist. Anstelle des Kraftsensors, Wegesensors und/oder Betätigungsgeschwindigkeitssensors kann auch ein alternativer, einen Bedienerwunsch erfassender Sensor vorgesehen sein. Vorzugsweise erfasst der Kraftsensor in zumindest einem Betriebszustand eine auf das Bedienelement und/oder das weitere Bedienelement ausgeübte Kraft, insbesondere einen Druck. Der Kraftsensor erfasst dazu vorzugsweise eine Kraft die auf den Kraftsensor wirkt. Besonders bevorzugt kann über den Kraftsensor ein Betrag, wie insbesondere eine Stärke einer Kraft, die auf den Kraftsensor wirkt, erfasst werden. Hierdurch kann vorzugsweise eine von einem Bediener auf die Gartengerätehandgriffvorrichtung ausgeübte Kraft erfasst werden. Dadurch kann vorzugsweise auf einen Betriebszustand und/oder auf einen Bedienerwunsch rückgeschlossen werden. Besonders bevorzugt kann abhängig von einer von einem Bediener auf die Gartengerätehandgriffvorrichtung ausgeübten Kraft eine Geschwindigkeit einer Antriebseinheit gesteuert werden. Dadurch kann vorteilhaft eine Gartengerätehandgriffvorrichtung zur Verfügung gestellt werden, die eine intuitive Bedienung ermöglicht.

Des Weiteren wird vorgeschlagen, dass die Gartengerätehandgriffvorrichtung zumindest eine mit der zumindest einen Elektronikeinheit verbundene Sensoreinheit, mit zumindest einem Beschleunigungsensor und/oder Lagesensor zu einer Erfassung einer Kenngröße einer Bewegung und/oder Lage der Gartengerätehandgriffvorrichtung, aufweist. Vorzugsweise ist der Beschleunigungs- und/oder Lagesensor zu einer Erfassung eines Bewegungsbereichs der Gartengerätehandgriffvorrichtung vorgesehen. Über den Beschleunigungs- und/oder Lagesensor kann vorzugsweise eine Ausrichtung und/oder eine Ausrichtungsänderung der Gartengerätehandgriffvorrichtung überwacht werden. So kann insbesondere ein Risiko einer Verletzung von einem Bediener und Anderer vermieden werden. Insbesondere kann so realisiert werden, dass die Gartengerätehandgriffvorrichtung lediglich in einem begrenzten Bewegungsbereich verwendet werden kann. Wird die Gartengerätehandgriffvorrichtung beispielsweise aus dem sicheren Bewegungsbereich herausbewegt, können Verletzungen nicht mehr ausgeschlossen werden und das System wird insbesondere aktomatisch deaktiviert. Alternativ könnte auch ein Warnsignal, beispielsweise akustisch, optisch und/oder taktil, ausgegeben werden. Zudem wäre auch denkbar, dass das System bei zu schnellen Bewegungen deaktiviert wird. So kann vorteilhaft ein System mit einer Gartengerätehandgriffvorrichtung zur Verfügung gestellt werden, das insbesondere eine besonders hohe Sicherheit bei unvorhergesehenen Bewegungen des Gartengerätehandgriffvorrichtung aufweist. Zudem kann ein System zur Verfügung gestellt werden, das nur in einem definierten Bewegungsbereich, insbesondere in einem bevorzugten Anwendungswinkelbereich und ganz besonders bevorzugt in einem einstellbaren Bewegungsbereich arbeitet. Ferner kann ein System zur Verfügung gestellt werden, das nur in einem definierten Lagebereich arbeitet. Dies kann beispielsweise ein Überkopfarbeiten eines Anwenders oder ein bodennahes Arbeiten umfassen. Insbesondere sollen damit alle Arbeitspositionen zwischen einer vertikal in einen Boden und/oder Untergrund gerichteten Arbeitsposition bzw. Ausrichtung der Gartengerätehandgriffvorrichtung und einer vertikal nach oben, gewissermaßen in den Himmel gerichteten Arbeitsposition abgedeckt sein. Alle Betriebspositionen die horizontal wie vertikal sind, sind denkbar. Es kann vorteilhaft eine hohe Bedienersicherheit erreicht werden.

Es wird ferner vorgeschlagen, dass die Elektronikeinheit dazu vorgesehen ist, zumindest in Abhängigkeit einer erfassten Bedienerbewegung auf dem Bedienelement und/oder dem weiteren Bedienelement zumindest eine von einer Aktivierung oder Deaktivierung der Energieversorgung der Antriebseinheit verschiedene Funktion der Gartenbearbeitungsmaschine zu schalten. Vorzugsweise ist die Elektronikeinheit dazu vorgesehen, zumindest in Abhängigkeit von einer erfassten Bedienerbewegung auf dem Bedienelement und/oder auf dem weiteren Bedienelement zumindest eine Gartengerätefunktion zu schalten, insbesondere zu aktivieren oder zu deaktivieren. Eine von einer Aktivierung oder Deaktivierung der Energieversorgung der Antriebseinheit verschiedene Gartengerätefunktion könnte beispielsweise eine Arretierschaltfunktion, eine Totmannschaltfunktion, eine Drehzahlfunktion oder Drehmomentfunktion der Antriebseinheit, eine Bearbeitungsfunktion (Schnitthöhe, Schnittbreite, Schnittgeschwindigkeit, Gasgeben, Bremsen, automatischer Schneidfadenwechsel, automatische Schneidfadennachstellung, Fahrgeschwindigkeit, Anwendungswinkelbereich, Lagebereich oder Bewegungsbereich usw.) oder eine andere, einem Fachmann als sinnvoll erscheinende Gartengerätefunktion sein. Die auf dem Bedienelement und/oder dem weiteren Bedienelement erfolgte und insbesondere mittels der Elektronikeinheit erfasste Bedienerbewegung kann beispielsweise als Wischbewegung, als Tippbewegung, als Drehbewegung, als Relativbewegung von zumindest zwei Fingern auf dem Bedienelement und/oder auf dem weiteren Bedienelement, als Zeichnung eines Symbols mittels zumindest eines Fingers auf dem Bedienelement und/oder auf dem weiteren Bedienelement oder als eine andere, einem Fachmann als sinnvoll erscheinende Bedienerbewegung ausgebildet sein. Die Elektronikeinheit weist bevorzugt zumindest eine Auswerteeinheit auf, die dazu vorgesehen ist, eine Bedienerbewegung auf dem Bedienelement und/oder auf dem weiteren Bedienelement auszuwerten. Mittels der erfindungsgemäßen Ausgestaltung kann vorteilhaft eine komfortable Bedienung ermöglicht werden.

Vorteilhafterweise ist die Elektronikeinheit zumindest dazu vorgesehen, zumindest in Abhängigkeit von einem auf dem Bedienelement und/oder auf dem weiteren Bedienelement getätigten Gestensymbol zumindest eine Gartengerätefunktion, insbesondere eine von einer Aktivierung oder Deaktivierung der Energieversorgung der Antriebseinheit verschiedene Gartengerätefunktion, zu schalten, insbesondere zu aktivieren oder zu deaktivieren. Der Ausdruck "getätigtes Gestensymbol" soll hier insbesondere eine Darstellung einer Geste definieren, die mit zumindest einem Finger, mit mehreren Fingern oder mit einer Hand auf dem Bedienelement und/oder auf dem weiteren Bedienelement erzeugbar und/oder darstellbar ist und/oder die infolge eines Auflegens, zumindest eines Fingers, mehrerer Finger oder einer Hand auf das Bedienelement und/oder auf das weitere Bedienelement erzeugbar und/oder darstellbar ist. Beispielsweise ist es denkbar, dass ein Bediener infolge eines Auflegens von zwei Fingern auf das Bedienelement oder auf das weitere Bedienelement ein Gestensymbol für die Zahl "2" auf dem Bedienelement oder dem weiteren Bedienelement darstellt und die Elektronikeinheit infolgedessen beispielsweise eine Abtriebseinheit in einen zweiten Gang schaltet, eine Schnitthöhe in Stufe zwei einstellt o. dgl. Weitere, einem Fachmann als sinnvoll erscheinende Tätigungen von Gestensymbolen zu einer Schaltung zumindest einer Gartengerätefunktion sind ebenfalls denkbar. Mittels der erfindungsgemäßen Ausgestaltung kann vorteilhaft eine einfache Bedienung realisiert werden, die besonders vorteilhaft intuitiv von einem Bediener durchführbar ist.

Bevorzugt weist die Elektronikeinheit insbesondere zumindest eine Auswerteeinheit auf, die zumindest dazu vorgesehen ist, zumindest eine Flächenkenngröße des Bedienelements und/oder des weiteren Bedienelements auszuwerten. Bevorzugt ist die Auswerteeinheit dazu vorgesehen, eine als Größe einer Kontaktfläche ausgebildete Flächenkenngröße des Bedienelements und/oder des weiteren Bedienelements auszuwerten. Vorzugsweise ist die Auswerteeinheit dazu vorgesehen, eine Größe einer von zumindest einem Finger, von mehreren Fingern oder von einer Hand eines Bedieners bedeckte Kontaktfläche des Bedienelements und/oder des weiteren Bedienelements bezogen auf eine Gesamtfläche des Bedienelements und/oder des weiteren Bedienelements auszuwerten. Es ist jedoch auch denkbar, dass die Auswerteeinheit zusätzlich oder alternativ dazu vorgesehen ist, eine als Flächenpressung ausgebildete Flächenkenngröße des Bedienelements und/oder des weiteren Bedienelements oder eine andere, einem Fachmann als sinnvoll erscheinende Flächenkenngröße auszuwerten. Beispielsweise ist es denkbar, dass die Elektronikeinheit ein Verdrehen einer Hand auf dem Bedienelement und/oder auf dem weiteren Bedienelement gemäß einer Bewegung bei einer Betätigung eines Motorradgasgriffs auswertet und infolgedessen eine Drehzahlerhöhung/-senkung der Antriebseinheit erfolgt. Zudem ist es denkbar, dass ein Drücken, insbesondere ein Zusammendrücken, des Bedienelements und/oder des weiteren Bedienelements, insbesondere bei einer Anordnung des Bedienelements und/oder des weiteren Bedienelements entlang eines Großteils einer Gesamtumfangserstreckung eines von einem Bediener greifbaren Griffelements der Gartengerätehandgriffvorrichtung, auswertbar ist und infolgedessen eine Bremsfunktion schaltbar ist, die die Antriebseinheit oder ein Antriebsrad aktiv abbremst.

Mittels der erfindungsgemäßen Ausgestaltung kann vorteilhaft beispielsweise eine Anzahl an Fingern, die von einem Bediener auf dem Bedienelement und/oder dem weiteren Bedienelement aufgelegt sind, eine Größe einer Haltekraft oder andere, einem Fachmann als sinnvoll erscheinende Flächenkenngrößen ausgewertet werden. Es kann besonders vorteilhaft ein Rückschluss auf einen sicheren Halt gezogen werden. Somit kann vorteilhaft eine hohe Bedienersicherheit erreicht werden. Ferner kann vorteilhaft infolge einer Auswertung der Flächenkenngröße des Bedienelements und/oder des weiteren Bedienelements eine Funktion der Gartenbearbeitungsmaschine angesteuert werden, wie beispielsweise eine Veränderung einer Drehzahl der Antriebseinheit in Abhängigkeit von einer Größe einer von einem Bediener gegriffenen oder berührten Fläche des Bedienelements und/oder des weiteren Bedienelements, oder die Auswertung ist vorteilhaft bei einer Schaltung der Energieversorgung der Antriebseinheit von der Elektronikeinheit berücksichtigbar, wobei insbesondere ein Aktivierung der Energieversorgung der Antriebseinheit unterbindbar ist, insbesondere solange eine Größe einer von einem Bediener gegriffenen oder berührten Fläche des Bedienelements und/oder des weiteren Bedienelements unter einem in der Elektronikeinheit hinterlegten Grenzwert liegt.

Vorzugsweise wird ein System vorgeschlagen, dass nebst der Gartengerätehandgriffvorrichtung ferner die Gartenbearbeitungsmaschine aufweist. Vorzugsweise ist die Gartenbearbeitungsmaschine mit der Gartengerätehandgriffvorrichtung stabförmig ausgebildet. Bevorzugt ist das System stabförmig ausgebildet. Besonders bevorzugt ist die Gartenbearbeitungsmaschine als motorisch betreibbare Gartenbearbeitungsmaschine ausgebildet. Vorzugsweise weist die Gartengerätehandgriffvorrichtung eine Antriebseinheit auf, an welche die Gartenbearbeitungsmaschine direkt angekoppelt werden kann. Dies wäre beispielsweise bei einer Ausbildung des Systems als Rasentrimmer, als Heckenschere, Motorsäge und/oder als Astsäge denkbar. Es kann aber auch in einer Ausbildung als roll- oder fahrbares System, insbesondere als Rasenmäher oder Mulcher, Anwendung finden. Die Gartenhandgriffvorrichtung kann sowohl fest, bevorzugt einstückig, an der Gartenbearbeitungsmaschine angeordnet sein, als auch lösbar mit der Gartenbearbeitungsmaschine verbunden sein.

Ferner wird ein Verfahren zu einer Bedienung der Gartengerätehandgriffvorrichtung vorgeschlagen, wobei in zumindest einem Verfahrensschritt zumindest eine Reaktion der Elektronikeinheit auf eine Betätigung des Bedienelements in Abhängigkeit einer berührungsempfindlichen Kenngröße des weiteren Bedienelements erfolgt. Mittels der erfindungsgemäßen Ausgestaltung kann vorteilhaft eine komfortable Bedienung einer Gartenbearbeitungsmaschine ermöglicht werden. Ferner kann vorteilhaft eine intuitive Bedienung des Systems mit der Gartengerätehandgriffvorrichtung zur Verfügung gestellt werden.

Somit ist vorteilhaft eine hohe Sicherheit gegen eine unbeabsichtigte Inbetriebnahme der Antriebseinheit erreichbar. Zudem ist eine Inbetriebnahme erst infolge eines sicheren Handhabens des Gartengeräts erreichbar. Besonders bevorzugt kann eine Inbetriebnahme bzw. eine Aktivierung des Systems bzw. des Gartengeräts erst infolge einer Freigabebedienung erfolgen. Unter einer "Freigabebedienung" soll beispielsweise eine auf dem Bedienelement und/oder dem weiteren Bedienelement erfolgte und insbesondere mittels der Elektronikeinheit erfasste Bewegung und/oder ein auf dem Bedienelement und/oder dem weiteren Bedienelement getätigtes und insbesondere mittels der Elektronikeinheit erfasstes Gestensymbol verstanden werden. Eine erfasste Bewegung kann beispielsweise als Wischbewegung, als Tippbewegung, als Drehbewegung, als Relativbewegung von zumindest zwei Fingern auf dem Bedienelement und/oder auf dem weiteren Bedienelement, als Zeichnung eines Symbols mittels zumindest eines Fingers auf dem Bedienelement und/oder auf dem weiteren Bedienelement oder als eine andere, einem Fachmann als sinnvoll erscheinende Bedienerbewegung ausgebildet sein.

Vorzugsweise wird vorgeschlagen, dass in zumindest einem Verfahrensschritt mittels der Elektronikeinheit zumindest eine Gartengerätefunktion, insbesondere eine von einer Aktivierung oder Deaktivierung der Energieversorgung der Antriebseinheit verschiedene Gartengerätefunktion, in Abhängigkeit von einer Betätigung eines zusätzlichen Bedienelements, das als elektronisches Bedienelement und bewegungsempfindlich ausgebildet ist, schaltbar ist. Es kann vorteilhaft eine komfortable Aktivierung oder Deaktivierung einer Gartengerätefunktion erreicht werden.

Des Weiteren wird vorgeschlagen, dass in zumindest einem Verfahrensschritt die Elektronikeinheit in Abhängigkeit einer Betätigungsabfolge des Bedienelements und/oder des weiteren Bedienelements eine zumindest teilweise automatische Schaltung einer Funktion der Gartenbearbeitungsmaschine durchführt. Unter einer "Betätigungsabfolge" soll hier insbesondere eine zeitlich definierte und/oder hinsichtlich einer Reihenfolge definierte Betätigung des Bedienelements und/oder des weiteren Bedienelements, wie beispielsweise eine mehrfache Betätigung des Bedienelements und/oder des weiteren Bedienelements innerhalb eines vorbestimmten Zeitraums, eine definierte Reihenfolge einer Betätigung des Bedienelements und/oder des weiteren Bedienelements, eine Betätigungssequenz einer Betätigung des Bedienelements und/oder des weiteren Bedienelements, insbesondere innerhalb eines vorbestimmten Zeitraums, eine vorgegebene Betätigungsdauer des Bedienelements und/oder des weiteren Bedienelements, insbesondere innerhalb eines vorbestimmten Zeitraums, o. dgl., verstanden werden. Betätigt ein Bediener das Bedienelement und/oder das weitere Bedienelement beispielsweise innerhalb eines vorbestimmten Zeitraums zumindest zweimal hintereinander und betätigt anschließend das weitere Bedienelement oder berührt das weitere Bedienelement während der mehrfachen Betätigung des Bedienelements, erfolgt eine Aktivierung der Energieversorgung der Antriebseinheit. Der vorbestimmte Zeitraum ist insbesondere kleiner als 20 Sekunden, bevorzugt kleiner als 10 Sekunden und besonders bevorzugt kleiner als 5 Sekunden. Weitere, einem Fachmann als sinnvoll erscheinende Betätigungen des Bedienelements und/oder des weiteren Bedienelements zumindest zu einer Schaltung einer Energieversorgung der Antriebseinheit oder zumindest zu einer Aktivierung/Deaktivierung einer Gartengerätefunktion sind ebenfalls denkbar. Dadurch kann vorteilhaft eine intuitive Bedienung des Systems mit der Gartengerätehandgriffvorrichtung zur Verfügung gestellt werden.

Es wird ferner vorgeschlagen, dass in zumindest einem Verfahrensschritt die Elektronikeinheit mittels des Beschleunigungssensors und/oder Lagesensors der Sensoreinheit eine Bewegung oder Lage der Gartengerätehandgriffvorrichtung erfasst und abhängig von einer Kenngröße einer Bewegung oder Lage zumindest eine Funktion der Gartenbearbeitungsmaschine aktiviert oder deaktiviert. Vorzugsweise wird die eine Antriebseinheit und/oder die Gartenbearbeitungsmaschine bei einem zu großen Bewegungsbereich und/oder bei einer zu hohen Bewegungsgeschwindigkeit automatisch deaktiviert. Vorteilhafterweise ist der zulässige Bewegungsbereich und/oder die Bewegungsgeschwindigkeit abhängig von der verwendeten Gartenbearbeitungsmaschine. Beispielsweise erlaubt das System bei Verwendung einer Astsäge eine Bearbeitungsausrichtung oberhalb einer zum Boden horizontalen Ebene, bei einer Harke beispielsweise jedoch nicht. Dadurch kann vorteilhaft eine hohe Bedienersicherheit erreicht werden.

Es wird weiter vorgeschlagen, dass in zumindest einem Verfahrensschritt die Elektronikeinheit bei einer Überschreitung einer Dauer eines Schaltzustands des Bedienelements und/oder des weiteren Bedienelements der Gartengerätehandgriffvorrichtung zumindest eine Funktion der Gartenbearbeitungsmaschine aktiviert oder deaktiviert. Hierdurch kann vorteilhaft beispielsweise eine Dauer eines Ausbleibens eines Kontakts zwischen einem Bediener und dem Bedienelement und/oder dem weiteren Bedienelement überwacht werden. Wird beispielsweise das Bedienelement und/oder das weitere Bedienelement über einen definierten Zeitraum hinweg nicht berührt, wird eine Antriebseinheit automatisch deaktiviert. Ferner kann dadurch insbesondere erreicht werden, dass die Antriebseinheit bei einem Umgreifen nicht direkt automatisch deaktiviert wird, sondern eine definierte Dauer für ein Umgreifen vorgesehen und zulässig ist. Dadurch kann vorteilhaft eine hohe Bedienersicherheit erreicht werden. Ferner kann vorteilhaft eine intuitive Bedienung für das System mit der Gartengerätehandgriffvorrichtung zur Verfügung gestellt werden.

Zudem wird vorgeschlagen, dass in zumindest einem Verfahrensschritt in Abhängigkeit einer Betätigungsabfolge des Bedienelements bezogen auf eine vorbestimmte Zeitdauer eine zumindest teilweise automatische Schaltung einer Funktion der Gartenbearbeitungsmaschine erfolgt. Somit ist vorteilhaft eine hohe Sicherheit gegen eine unbeabsichtigte Inbetriebnahme der Antriebseinheit erreichbar. Zudem ist eine Inbetriebnahme erst infolge eines sicheren Handhabens der Gartenbearbeitungsmaschine erreichbar. Es kann vorteilhaft eine komfortable Aktivierung oder Deaktivierung einer Funktion der Gartenbearbeitungsmaschine erreicht werden.

Das erfindungsgemäße System, die erfindungsgemäße Gartengerätehandgriffvorrichtung und/oder das erfindungsgemäße Verfahren sollen/soll hierbei nicht auf die oben beschriebene Anwendung und Ausführungsform beschränkt sein. Insbesondere können/kann das erfindungsgemäße System, die erfindungsgemäße Gartengerätehandgriffvorrichtung und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes System mit einer Gartengerätehandgriffvorrichtung und mit einer Elektronikeinheit und eine Gartenbearbeitungsmaschine in einer schematischen Darstellung,
- Fig. 2: die Gartengerätehandgriffvorrichtung des erfindungsgemäßen Systems mit einer Bedieneinheit, die ein von einem Bediener betätigbares Bedienelement und ein von einem Bediener betätigbares weiteres Bedienelement aufweist, in einer schematischen Darstellung,
- Fig. 3: das erfindungsgemäße System mit der Gartengerätehandgriffvorrichtung und mit der Elektronikeinheit, die Gartenbearbeitungsmaschine und einen Bewegungsbereich in einer schematischen Darstellung,
- Fig. 4: ein schematisches Ablaufdiagramm eines Betriebs des erfindungsgemäßen Systems mit der Gartengerätehandgriffvorrichtung und mit der Elektronikeinheit,
- Fig. 5: ein alternatives erfindungsgemäßes System mit einer Gartengerätehandgriffvorrichtung und mit einer Elektronikeinheit und eine Gartenbearbeitungsmaschine in einer schematischen Darstellung,
- Fig. 6: einen Griff der Gartengerätehandgriffvorrichtung des alternativen erfindungsgemäßen Systems in einer ersten Stellung in einer schematischen Darstellung,
- Fig. 7: den Griff der Gartengerätehandgriffvorrichtung des alternativen erfindungsgemäßen Systems in einer zweiten Stellung in einer schematischen Darstellung,
- Fig. 8: ein schematisches Ablaufdiagramm eines Betriebs des alternativen erfindungsgemäßen Systems mit der Gartengerätehandgriffvorrichtung und mit der Elektronikeinheit.

### Beschreibung der Ausführungsbeispiele

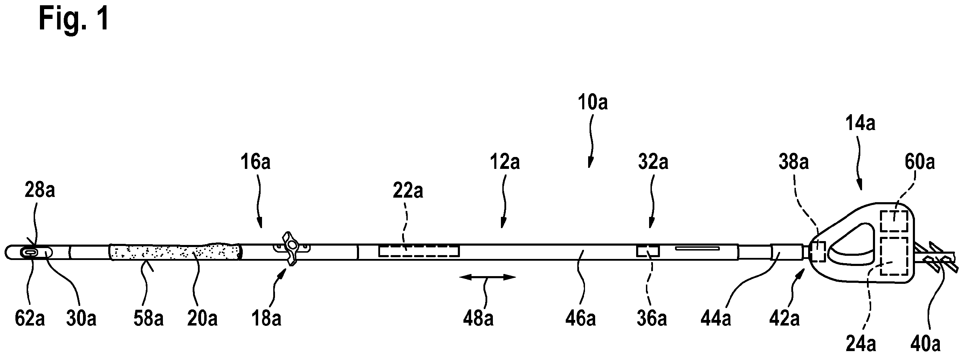

Figur 1 zeigt ein erfindungsgemäßes System 10a mit einer Gartengerätehandgriffvorrichtung 12a und mit einer Elektronikeinheit 22a. Ferner zeigt Figur 1 eine Gartenbearbeitungsmaschine 14a. Die Gartenbearbeitungsmaschine 14a ist als Heckenschere ausgebildet. Grundsätzlich wäre jedoch auch eine andere, einem Fachmann als sinnvoll erscheinende Ausbildung denkbar. Die Gartenbearbeitungsmaschine 14a weist eine Antriebseinheit 24a auf. Die Antriebseinheit 24a ist von einem Elektromotor gebildet. Die Antriebseinheit 24a wird von einem nicht weiter sichtbaren Akkumulator mit Energie versorgt. Die Gartenbearbeitungsmaschine 14a ist als eigenständiges Gerät ausgebildet, welches mit der Gartengerätehandgriffvorrichtung 12a gekoppelt werden kann. Die Gartenbearbeitungsmaschine 14a kann grundsätzlich auch ohne die Gartengerätehandgriffvorrichtung 12a verwendet werden. Grundsätzlich wäre jedoch auch denkbar, dass die Gartenbearbeitungsmaschine 14a als Aufsatz für die Gartengerätehandgriffvorrichtung 12a ausgebildet ist. Die Antriebseinheit 24a und/oder der nicht weiter sichtbare Akkumulator können insbesondere dann auch in der Gartengerätehandgriffvorrichtung 12a untergebracht sein. Die Gartenbearbeitungsmaschine 14a weist zu einer Kopplung mit der Gartengerätehandgriffvorrichtung 12a einen Kopplungsanschluss 38a auf. Der Kopplungsanschluss 38a ist sowohl zu einer mechanischen, als auch zu einer elektrischen Kopplung der Gartenbearbeitungsmaschine 14a mit der Gartengerätehandgriffvorrichtung 12a vorgesehen. Grundsätzlich wäre jedoch auch denkbar, dass die Gartenbearbeitungsmaschine 14a zwei getrennt voneinander ausgebildete Kopplungsanschlüsse jeweils zu einer mechanischen Kopplung und zu einer elektrischen Kopplung aufweist. Der Kopplungsanschluss 38a ist auf einer einem Bearbeitungswerkzeug 40a der Gartenbearbeitungsmaschine 14a angewandten Seite der Gartenbearbeitungsmaschine 14a angeordnet.

Die Gartengerätehandgriffvorrichtung 12a des Systems 10a ist an der Gartenbearbeitungsmaschine 14a anordenbar. Die Gartengerätehandgriffvorrichtung 12a ist abnehmbar an der Gartenbearbeitungsmaschine 14a anordenbar. Die Gartengerätehandgriffvorrichtung 12a ist trennbar an der Gartenbearbeitungsmaschine 14a angeordnet. Die Gartengerätehandgriffvorrichtung 12a und die Gartenbearbeitungsmaschine 14a sind in einem gekoppelten Zustand gemeinsam stabförmig ausgebildet. Die Gartengerätehandgriffvorrichtung 12a ist in einem gekoppelten Zustand fest mit der Gartenbearbeitungsmaschine 14a verbunden. Die Gartengerätehandgriffvorrichtung 12a weist hierzu einen mit dem Kopplungsanschluss 38a der Gartenbearbeitungsmaschine 14a korrespondierend Kopplungsanschluss 42a auf. Der Kopplungsanschluss 42a der Gartengerätehandgriffvorrichtung 12a verrastet in einem gekoppelten Zustand nicht weiter sichtbar mit dem Kopplungsanschluss 38a der Gartenbearbeitungsmaschine 14a. Die Kopplung kann, durch ein Zurückziehen einer Fixierhülse 44a des Kopplungsanschlusses 42a der Gartengerätehandgriffvorrichtung 12a zerstörungsfrei gelöst werden. Die Kopplungsanschlüsse 38a, 42a können auch derart ausgebildet sein, dass sie einen beliebigen Winkel und/oder eine beliebige Rotation von der Gartengerätehandgriffvorrichtung 12a zu der Gartenbearbeitungsmaschine 14a erlauben.

Die Gartengerätehandgriffvorrichtung 12a ist als Verlängerungsstange ausgebildet. Die Gartengerätehandgriffvorrichtung 12a weist einen stabförmigen Grundkörper 46a auf. Der Grundkörper 46a weist entlang einer Haupterstreckungsrichtung 48a einen annähernd konstanten Querschnitt auf. Der Grundkörper 46a besteht im Wesentlichen aus Metall. Grundsätzlich wäre jedoch auch ein anderes, einem Fachmann als sinnvoll erscheinendes Material denkbar. An einem entlang der Haupterstreckungsrichtung 48a vorderen Ende des Grundkörpers 46a ist der Kopplungsanschluss 42a angeordnet. Der Kopplungsanschluss 42a schließt direkt an den Grundkörper 46a an.

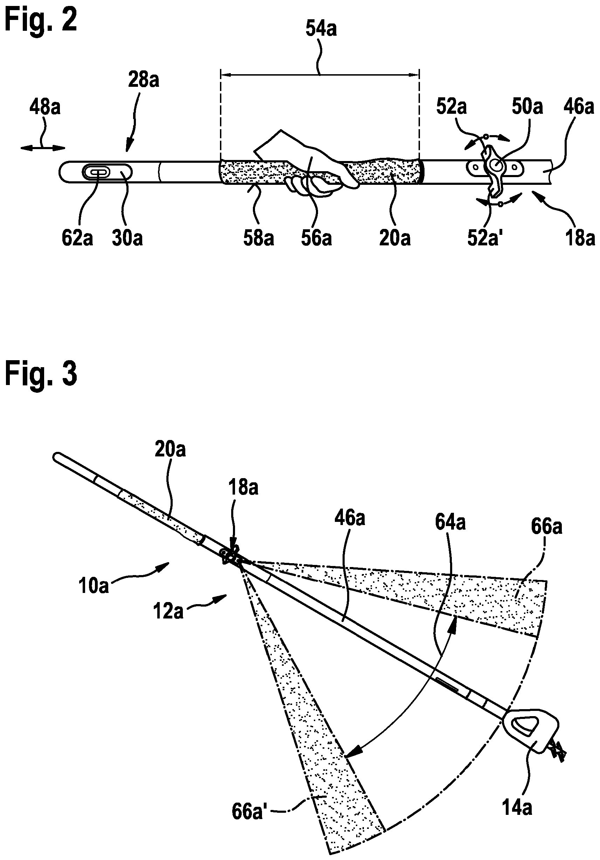

Ferner umfasst die Gartengerätehandgriffvorrichtung 12a eine Bedieneinheit 16a. Die Bedieneinheit 16a weist ein von einem Bediener betätigbares Bedienelement 18a auf. Das Bedienelement 18a ist als ein Drehschalter ausgebildet. Das Bedienelement 18a ist direkt an dem Grundkörper 46a angeordnet. Das Bedienelement 18a ist drehbar gelagert. Ferner weist das Bedienelement 18a zwei gegenüber einer Drehachse 50a in entgegengesetzte Richtungen senkrecht nach außenragende Betätigungsflügel 52a, 52a' auf. Die Betätigungsflügel 52a, 52a' umgreifen teilweise den Grundkörper 46a. Das Bedienelement 18a ist über die Betätigungsflügel 52a, 52a' um die Drehachse 50a auslenkbar. Das Bedienelement 18a weist eine Grundstellung auf. Das Bedienelement 18a befindet sich in den Figuren jeweils in einer Grundstellung. In einer Grundstellung ragen die Betätigungsflügel 52a, 52a' senkrecht zu der Haupterstreckungsrichtung 48a des Grundkörpers 46a aus der Drehachse 50a. Ferner weist das Bedienelement 18a eine Auslenkstellung auf. In der Auslenkstellung wird das Bedienelement 18a mittels zumindest eines der Betätigungsflügel 52a, 52a' in Umfangsrichtung um die Drehachse 50a verdreht. Das Bedienelement 18a kann in beide möglichen Drehrichtungen um ca. 45° gegenüber der Grundstellung verdreht werden. Eine Drehrichtung ist dabei nicht relevant. Dadurch kann insbesondere erreicht werden, dass das Bedienelement 18a unabhängig von einer Stellung der Gartengerätehandgriffvorrichtung 12a mit derselben Wirkung betätigt werden kann. Das Bedienelement 18a ist federbeaufschlagt. Das Bedienelement 18a begibt sich selbsttätig bei ausbleibender Krafteinwirkung von einer Auslenkstellung in eine Grundstellung und verharrt in dieser. Das Bedienelement 18a weist einen nicht weiter sichtbaren Schaltkontakt auf. Der Schaltkontakt ist infolge einer Betätigung des Bedienelements 18a schaltbar. Der Schaltkontakt des weiteren Bedienelements 20a ist dazu vorgesehen, ein als elektrische Kenngröße ausgebildetes Schaltsignal in Abhängigkeit einer Auslenkung des Bedienelements 18a in eine Auslenkstellung zu erzeugen. Der Schaltkontakt erzeugt bei einer Auslenkung des Bedienelements 18a in eine Auslenkstellung ein Betätigungsschaltsignal (Figur 2).

Des Weiteren weist die Bedieneinheit 16a ein von einem Bediener betätigbares weiteres Bedienelement 20a auf. Das weitere Bedienelement 20a ist als Griffbereich ausgebildet. Das weitere Bedienelement 20a ist stabförmig ausgebildet. Das weitere Bedienelement 20a bildet eine Grifffläche 58a. Ferner erstreckt sich das weitere Bedienelement 20a vollständig entlang einer Umfangserstreckung der Gartengerätehandgriffvorrichtung 12a. Das weitere Bedienelement 20a umgreift den Grundkörper 46a der Gartengerätehandgriffvorrichtung 12a in Umfangsrichtung, senkrecht zu der Haupterstreckungsrichtung 48a vollständig. Das weitere Bedienelement 20a weist eine Haupterstreckungsrichtung auf, die sich parallel zu der Haupterstreckungsrichtung 48a des Grundkörpers 46a erstreckt. Parallel zu der Haupterstreckungsrichtung 48a des Grundkörpers 46a weist das weitere Bedienelement 20a eine Erstreckung 54a auf, die wesentlich größer als eine Handbreite ist. In der Figur 2 ist hierzu beispielhaft eine Hand 56a des Bedieners dargestellt. Hierdurch kann insbesondere erreicht werden, dass das weitere Bedienelement 20a variabel gegriffen werden kann. Hierdurch kann insbesondere eine natürliche Griffposition ermöglicht werden. Das weitere Bedienelement 20a ist als ein elektronisches Bedienelement ausgebildet, welches berührungsempfindlich ausgebildet ist. Über das weitere Bedienelement 20a kann eine Berührung durch einen Bediener, insbesondere eine Hand 56a des Bedieners ermöglicht werden. Das weitere Bedienelement 20a weist hierzu einen nicht weiter sichtbaren Schaltkontakt auf. Der Schaltkontakt ist infolge einer Betätigung des weiteren Bedienelements 20a schaltbar. Der Schaltkontakt des weiteren Bedienelements 20a ist dazu vorgesehen, ein als elektrische Kenngröße ausgebildetes Schaltsignal in Abhängigkeit einer Berührung des weiteren Bedienelements 20a zu erzeugen. Der Schaltkontakt erzeugt bei einer Berührung des weiteren Bedienelements 20a durch eine Hand 56a eines Bedieners ein Betätigungsschaltsignal (Figur 2).

Ferner weist das System 10a eine Elektronikeinheit 22a auf. Die Elektronikeinheit 22a ist als Steuerelektronik ausgebildet. Die Elektronikeinheit 22a ist in dem Grundkörper 46a der Gartengerätehandgriffvorrichtung 12a angeordnet. Die Elektronikeinheit 22a bildet einen Teil der Gartengerätehandgriffvorrichtung 12a. Alternativ wäre jedoch auch denkbar, dass die Elektronikeinheit 22a einen Teil einer Elektronikeinheit 60a der Gartenbearbeitungsmaschine 14a bildet und damit in einem Gehäuse der Gartenbearbeitungsmaschine 14a angeordnet ist. Die Elektronikeinheit 22a ist dazu vorgesehen, in Abhängigkeit einer Betätigung des Bedienelements 18a und des weiteren Bedienelements 20a zumindest eine Energieversorgung der Antriebseinheit 24a zu schalten. Eine Betätigung des Bedienelements 18a und des weiteren Bedienelements 20a ist elektronisch mittels der Elektronikeinheit 22a abfragbar und erfassbar. Hierzu werden die Schaltsignale der Schaltkontakte des Bedienelements 18a und des weiteren Bedienelements 20a an die Elektronikeinheit 22a übermittelt und von dieser ausgewertet sowie weiterverarbeitet. Die Elektronikeinheit 22a ist in einem gekoppelten Zustand der Gartengerätehandgriffvorrichtung 12a mit der Gartenbearbeitungsmaschine 14a über die Kopplungsanschlüsse 38a, 42a mit der Elektronikeinheit 60a der Gartenbearbeitungsmaschine 14a verbunden. Die Elektronikeinheit 22a des Systems 10a ist zu einer Ansteuerung der Elektronikeinheit 60a der Gartenbearbeitungsmaschine 14a vorgesehen. Die Elektronikeinheit 22a des Systems 10a kann über die Elektronikeinheit 60a der Gartenbearbeitungsmaschine 14a die Antriebseinheit 24a der Gartenbearbeitungsmaschine 14a ansteuern. Ferner wird die Elektronikeinheit 22a in einem gekoppelten Zustand über den Akkumulator der Gartenbearbeitungsmaschine 14a mit Energie versorgt. Das System 10a wird in einem gekoppelten Zustand über die Kopplungsanschlüsse 38a, 42a über den Akkumulator der Gartenbearbeitungsmaschine 14a mit Energie versorgt. Grundsätzlich wäre jedoch auch denkbar, dass das System 10a bzw. die Gartengerätehandgriffvorrichtung 12a einen eigenen integrierten Akkumulator aufweist.

Die Elektronikeinheit 22a ist ferner dazu vorgesehen, in Abhängigkeit einer erfassten Bedienerbewegung auf dem weiteren Bedienelement 20a zumindest eine von einer Aktivierung oder Deaktivierung der Energieversorgung der Antriebseinheit 24a verschiedene Funktion der Gartenbearbeitungsmaschine 14a zu schalten. Beispielsweise kann durch eine Drehbewegung der Hand 56a des Bedieners in Umfangsrichtung auf der Grifffläche 58a des weiteren Bedienelements 20a abhängig von einer Drehrichtung, eine Geschwindigkeit der Antriebseinheit 24a verändert werden. Grundsätzlich sind jedoch auch noch weitere, einem Fachmann als sinnvoll erscheinende Bedienerbewegungen denkbar.

Die Elektronikeinheit 22a weist einen Timer auf. Der Timer ist dazu vorgesehen, eine Dauer eines Schaltzustands des Bedienelements 18a und des weiteren Bedienelements 20a zu überwachen. Hierzu wird von der Elektronikeinheit 22a eine Dauer eines Schaltsignals der Schaltkontakte des Bedienelements 18a und des weiteren Bedienelements 20a überwacht. Die Elektronikeinheit 22a überwacht in einem Betrieb sowohl eine Dauer eines Betätigungsschaltsignals, als auch eine Dauer eines Ausbleibens eines Betätigungsschaltsignals.

Ferner weist das System 10a eine mit der Elektronikeinheit 22a verbundene Sensoreinheit 32a auf. Die Sensoreinheit 32a weist einen Beschleunigungssensor und/oder Lagesensor 36a auf. Der Beschleunigungssensor und/oder Lagesensor 36a ist mit der Elektronikeinheit 22a nicht weiter sichtbar verbunden. Der Beschleunigungssensor und/oder Lagesensor 36a ist in dem Grundkörper 46a der Gartengerätehandgriffvorrichtung 12a angeordnet. Der Beschleunigungssensor und/oder Lagesensor 36a ist in einem vorderen, dem Kopplungsanschluss 42 der Gartengerätehandgriffvorrichtung 12a zugewandten Bereich des Grundkörpers 46a angeordnet. Ferner ist der Beschleunigungssensor und/oder Lagesensor 36a zu einer Erfassung einer Kenngröße einer Bewegung und/oder Lage der Gartengerätehandgriffvorrichtung 12a vorgesehen. Der Beschleunigungssensor und/oder Lagesensor 36a ist in einem Betrieb dazu vorgesehen, einen Bewegungsbereich der Gartengerätehandgriffvorrichtung 12a, insbesondere eines vorderen, dem Kopplungsanschluss 42 zugewandten Bereich der Gartengerätehandgriffvorrichtung 12a, zu erfassen. Ferner ist der Beschleunigungssensor und/oder Lagesensor 36a dazu vorgesehen, eine Bewegungsgeschwindigkeit der Gartengerätehandgriffvorrichtung 12a zu erfassen. Der Beschleunigungssensor und/oder Lagesensor 36a erfasst in einem Betrieb eine Bewegungsgeschwindigkeit eines vorderen, dem Kopplungsanschluss 42 zugewandten Bereich der Gartengerätehandgriffvorrichtung 12a.

Des Weiteren weist das System 10a eine Lagereinheit 28a auf. Die Lagereinheit 28a bildet ein Teil der Gartengerätehandgriffvorrichtung 12a. Die Lagereinheit 28a ist an einem entlang der Haupterstreckungsrichtung 48a hinteren Ende des Grundkörpers 46a angeordnet. Die Lagereinheit 28a ist auf an einem dem Kopplungsanschluss 42a abgewandten Ende des Grundkörpers 46a an dem Grundkörper 46a angeordnet. Die Lagereinheit 28a schließt direkt an den Grundkörper 46a an. Die Lagereinheit 28a dient zu einem Aufhängen der Gartengerätehandgriffvorrichtung 12a. Die Lagereinheit 28a weist eine Ausnehmung 62a auf. Durch die Ausnehmung 62a kann bei einer Lagerung eine, insbesondere an einer Wand angebrachte Schraube und/oder Hacke geführt werden. Die Ausnehmung 62a erstreckt sich senkrecht zu der Haupterstreckungsrichtung 48a des Grundkörpers 46a durch die Gartengerätehandgriffvorrichtung 12a (Figur 2).

Ferner weist das System 10a ein in der Lagereinheit 28a integriertes Hauptschaltelement 30a auf. Das Hauptschaltelement 30a ist als Betriebsschalter ausgebildet. Das Hauptschaltelement 30a ist zumindest dazu vorgesehen, das Bedienelement 18a und das weitere Bedienelement 20a zu aktivieren und zu deaktivieren. Das Hauptschaltelement 30a ist dazu vorgesehen, das gesamte System 10a zu aktivieren und zu deaktivieren. Über das Hauptschaltelement 30a kann eine Energieversorgung unterbunden oder freigegeben werden. Das Hauptschaltelement 30a ist in die Lagereinheit 28a integriert. Das Hauptschaltelement 30a ist teilweise relativ zu dem Grundkörper 46a beweglich ausgebildet. Das Hauptschaltelement 30a begrenzt die Ausnehmung 62a der Lagereinheit 28a. Die Ausnehmung 62a ist über das Hauptschaltelement 30a ebenfalls teilweise relativ zu dem Grundkörper 46a beweglich ausgebildet. Die Ausnehmung 62a kann parallel zu der Haupterstreckungsrichtung 48a des Grundkörpers 46a relativ zu dem Grundkörper 46a begrenzt verschoben werden. Eine Position der Ausnehmung 62a relativ zu dem Grundkörper 46a definiert dabei eine Schaltstellung des Hauptschaltelements 30a. Durch Verschieben der Ausnehmung 62a wird eine Schaltstellung des Hauptschaltelements 30a verändert. Das Hauptschaltelement 30a weist zwei Schaltstellungen auf. Ist die Ausnehmung 62a in einer von dem Grundkörper 46a maximal entfernten Stellung, wie dies in den Figuren dargestellt ist, befindet sich das Hauptschaltelement 30a in einer Inaktivschaltstellung. In der Inaktivschaltstellung des Hauptschaltelements 30a wird eine Energieversorgung des Systems 10a freigegeben. Ist die Ausnehmung 62a dagegen in einer dem Grundkörper 46a maximal angenäherten Stellung, befindet sich das Hauptschaltelement 30a in einer Aktivschaltstellung. In der Aktivschaltstellung des Hauptschaltelements 30a wird eine Energieversorgung des Systems 10a freigegeben. In einem Lagerzustand, d.h. in einem aufgehängten Zustand des Systems 10a wird die Ausnehmung 62a durch die Schwerkraft, welche den Grundkörper 46a nach unten zieht, und durch eine Kraft einer Schraube und/oder eines Hackens, welche/welcher durch die Ausnehmung 62a geführt ist, automatisch in eine von dem Grundkörper 46a maximal entfernten Stellung gebracht. Dadurch wird das Hauptschaltelement 30a in einem Lagerzustand des Systems 10a automatisch in eine Inaktivschaltstellung gebracht. Hierdurch kann verhindert werden, dass sich das System 10a bei einer Lagerung in einem Aktiv- bzw. Standbyzustand befindet und ein unbeabsichtigtes Starten der Antriebseinheit 24a möglich ist (Figur 2).

Nachfolgend wird ein Verfahren zu einem Betrieb sowie zu einer Bedienung des Systems 10a beschrieben. Bei dem Verfahren erfolgt in einigen Verfahrensschritten eine Reaktion der Elektronikeinheit 22a auf eine Betätigung des Bedienelements 18a in Abhängigkeit einer berührungsempfindlichen Kenngröße des weiteren Bedienelements 20a. Ferner führt die Elektronikeinheit 22a in Abhängigkeit einer Betätigungsabfolge des Bedienelements 18a oder des weiteren Bedienelements 20a eine teilweise automatische Schaltung einer Funktion der Gartenbearbeitungsmaschine 14a durch. Des Weiteren aktiviert oder deaktiviert die Elektronikeinheit 22a bei einer Überschreitung einer Dauer eines Schaltzustands des Bedienelements 18a oder des weiteren Bedienelements 20a der Gartengerätehandgriffvorrichtung 12a zumindest eine Funktion der Gartenbearbeitungsmaschine 14a.

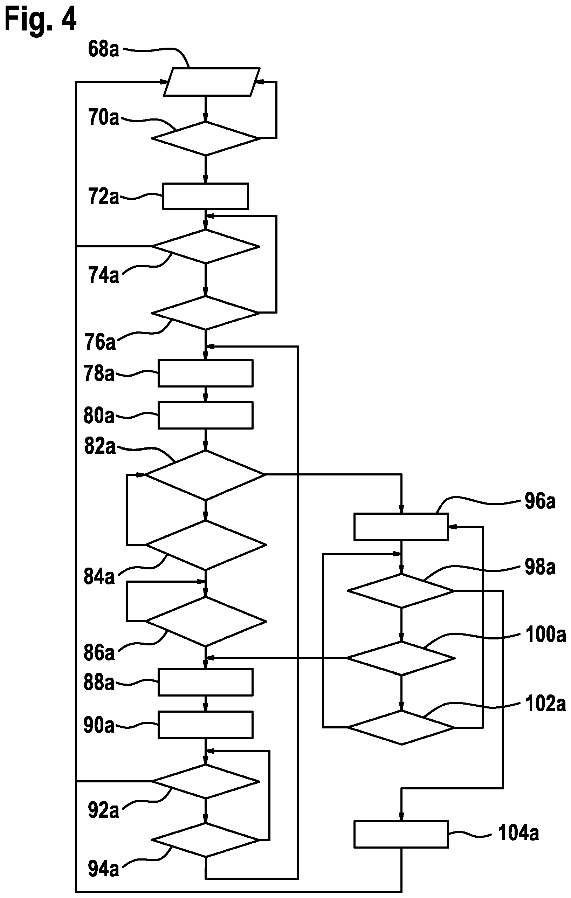

Für einen Betrieb des Systems 10a muss sich das Hauptschaltelement 30a in einer Aktivschaltstellung befinden. Befindet sich das Hauptschaltelement 30a in einer Inaktivschaltstellung, wie beispielsweise nach einer Lagerung, muss das Hauptschaltelement 30a manuell, durch herunterziehen der Ausnehmung 62a, in eine Aktivschaltstellung gebracht werden. In einer Aktivschaltstellung des Hauptschaltelements 30a muss zu einer Aktivierung der Antriebseinheit 24a unter anderem das weitere Bedienelement 20a von einem Bediener berührt, insbesondere umgriffen werden. Daher wird einem Bediener bei deaktivierter Antriebseinheit 24a sowie bei ausbleibender Berührung des weiteren Bedienelements 20a nicht weiter sichtbar in einer Ausgabe 68a dargestellt, dass das weitere Bedienelement 20a berührt werden muss. Grundsätzlich wäre jedoch auch denkbar, dass auf eine entsprechende Ausgabe 68a verzichtet wird. In diesem Zustand wird von der Elektronikeinheit 22a in einem Schritt 70a ständig ein Schaltsignal des weiteren Bedienelements 20a überprüft. Liegt kein Schaltsignal bzw. ein 0-Schaltsignal vor, wird die Ausgabe 68a aufrechterhalten. Liegt ein Schaltsignal bzw. ein 1-Schaltsignal vor, kann darauf geschlossen werden, dass das weitere Bedienelement 20a von einem Bediener berührt, insbesondere gegriffen wird, und es wird in einem weiteren Schritt 72a von der Elektronikeinheit 22a der Timer zurückgesetzt. Anschließend wird in einem weiteren Schritt 74a von der Elektronikeinheit 22a ein Wert des Timers überprüft. Innerhalb der ersten fünf Sekunden wird in einem weiteren Schritt 76a ein Schaltsignal des Bedienelements 18a überprüft. Wird das Bedienelement 18a nicht betätigt, wird weiterhin der Timer und das Schaltsignal überprüft. Wird dagegen das Bedienelement 18a innerhalb der fünf Sekunden des Timers betätigt, wird in einem weiteren Schritt 78a die Antriebseinheit 24a gestartet. Werden die fünf Sekunden des Timers ohne ein Schaltsignal überschritten, beginnt das Verfahren von Beginn an. Nach einem Start der Antriebseinheit 24a wird in einem weiteren Schritt 80a der Timer zurückgesetzt. Nun wird in einem weiteren Schritt 82a ein Schaltsignal des Bedienelements 18a überprüft (Figur 4).

Ist das Bedienelement 18a betätigt, wird in einem nächsten Schritt 84a ein Wert des Timers überprüft. Liegt der Wert des Timers unter 0,7 Sekunden, wird nochmals in dem Schritt 82a das Schaltsignal des Bedienelements 18a überprüft. Liegt der Wert über 0,7 Sekunden, kann davon ausgegangen werden, dass das Bedienelement 18a bewusst gedrückt gehalten wird. Ist dies der Fall, wird davon ausgegangen, dass das System 10a durch gedrückt Halten des Bedienelements 18a betrieben wird. Daher wird in einem weiteren Schritt 86a lediglich überprüft, ob das Bedienelement 18a gedrückt gehalten wird. Wird das Bedienelement 18a von einem Bediener losgelassen, wird die Antriebseinheit 24a in einem Schritt 88a gestoppt. Nach einem Stopp des Motors wird in einem Schritt 90a der Timer zurückgesetzt. Wird das Bedienelement 18a innerhalb von drei Sekunden wieder gedrückt, startet die Antriebseinheit 24a direkt wieder. Hierzu wird in einem Schritt 92a ein Wert des Timers überprüft. Solange dieser Wert unter drei Sekunden bleibt, wird in einem Schritt 94a überprüft, ob das Bedienelement 18a betätigt wird. Wird das Bedienelement 18a in dieser Zeit betätigt, wird der Betrieb mit dem Schritt 78a fortgesetzt und die Antriebseinheit 24a erneut gestartet. Wird dagegen in dem Schritt 92a der Wert von 3 Sekunden überschritten, beginnt das Verfahren von Beginn an.

Ist das Bedienelement 18a in dem Schritt 82a nicht betätigt, wird der Timer in einem Schritt 96 erneut zurückgesetzt. In diesem Fall wird davon ausgegangen, dass das System 10a durch Halten des weiteren Bedienelements 20a betrieben werden soll. Daher wird in einem nächsten Schritt 98a ein Wert des Timers überprüft. Liegt der Wert des Timers unter fünf Sekunden, wird in dem Schritt 100a das Schaltsignal des Bedienelements 18a überprüft. Wird das Bedienelement 18a in dieser Zeit betätigt, wird der Betrieb mit dem Schritt 88a fortgesetzt und die Antriebseinheit 24a gestoppt. Wird das Bedienelement 18a nicht betätigt, wird in einem Schritt 102a ein Schaltsignal des weiteren Bedienelements 20a überprüft. Wird das weitere Bedienelement 20a in dieser Zeit durch den Bediener berührt bzw. gehalten, wird der Betrieb mit dem Schritt 96a fortgesetzt und der Timer wird zurückgesetzt. So kann das weitere Bedienelement 20a während eines Betriebs auch kurzzeitig losgelassen werden, ohne dass die Antriebseinheit 24a stoppt. Wird dagegen die Zeit von fünf Sekunden überschritten, wird die Antriebseinheit 24a in einem weiteren Schritt 104a gestoppt und das Verfahren startet erneut von Beginn an.

Ein Betrieb des Systems 10a kann daher auf zwei Arten realisiert werden. Es kann sowohl durch ein betätigt Halten des Bedienelements 18a betrieben werden, als auch durch ein Halten des weiteren Bedienelements 20a. Zu einem Start der Antriebseinheit 24a muss jedoch sowohl das weitere Bedienelement 20a umgriffen werden, als auch das Bedienelement 18a zumindest kurz betätigt werden. So kann gewährleistet werden, dass ein Start der Antriebseinheit 24a gewünscht ist.

Während eines Betriebs, insbesondere bei aktivierter Antriebseinheit 24a, erfasst die Elektronikeinheit 22a mittels dem Beschleunigungssensors und/oder Lagesensor 36a der Sensoreinheit 32a eine Bewegung und/oder Lage der Gartengerätehandgriffvorrichtung 12a. Abhängig von einer Kenngröße einer Bewegung und/oder Lage aktiviert oder deaktiviert die Elektronikeinheit 22a eine Funktion der Gartenbearbeitungsmaschine 14a. Die Elektronikeinheit 22a überwacht dabei einen Bewegungs- und/oder Lagebereich der Gartengerätehandgriffvorrichtung 12a. Die Gartengerätehandgriffvorrichtung 12a darf dabei lediglich in einem definierten Winkelbereich 64a bewegt werden. Wird die Gartengerätehandgriffvorrichtung 12a über den Winkelbereich 64a hinweg in einen Grenzbereich 66a, 66a' bewegt, deaktiviert die Elektronikeinheit 22a selbsttätig die Antriebseinheit 24a. Ferner überwacht die Elektronikeinheit 22a zudem eine Bewegungsgeschwindigkeit der Gartengerätehandgriffvorrichtung 12a. Wird die Gartengerätehandgriffvorrichtung 12a zu schnell bewegt, deaktiviert die Elektronikeinheit 22a ebenfalls selbsttätig die Antriebseinheit 24a. So kann ein Verletzungsrisiko durch ungewollte, insbesondere hecktische Bewegungen minimiert werden (Figur 3).

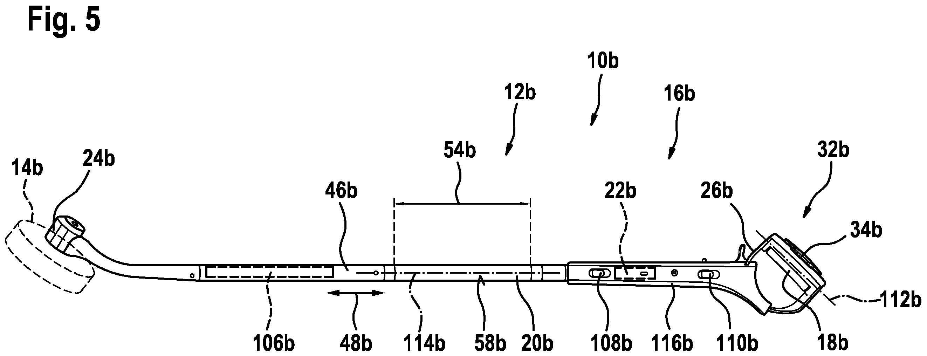

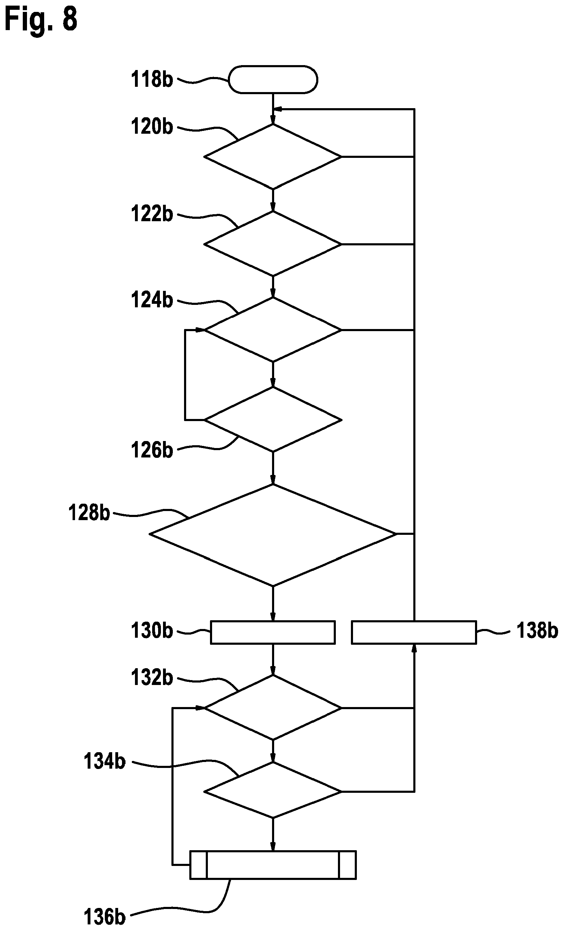

In den Figuren 5 bis 8 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des Ausführungsbeispiels der Figuren 1 bis 4 verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 8 ist der Buchstabe a durch den Buchstaben b ersetzt.

Figur 5 zeigt ein alternatives erfindungsgemäßes System 10b mit einer Gartengerätehandgriffvorrichtung 12b und mit einer Elektronikeinheit 22b. Ferner zeigt Figur 5 eine Gartenbearbeitungsmaschine 14b. Die Gartenbearbeitungsmaschine 14b ist gemeinsam mit der Gartengerätehandgriffvorrichtung 12b als Rasentrimmer ausgebildet. Grundsätzlich wäre jedoch auch eine andere, einem Fachmann als sinnvoll erscheinende Ausbildung denkbar.

Die Gartengerätehandgriffvorrichtung 12b weist eine Antriebseinheit 24b auf. Die Gartenbearbeitungsmaschine 14b ist nicht weiter sichtbar direkt mit der Antriebseinheit 24b gekoppelt. Die Gartenbearbeitungsmaschine 14b ist nicht weiter sichtbar mechanisch zu einer Übertragung einer Drehbewegung mit der Antriebseinheit 24b gekoppelt. Die Antriebseinheit 24b ist von einem Elektromotor gebildet. Die Gartenbearbeitungsmaschine 14b ist abnehmbar mit der Antriebseinheit 24b verbunden. Die Gartengerätehandgriffvorrichtung 12b des Systems 10b ist an der Gartenbearbeitungsmaschine 14b anordenbar. Die Gartenbearbeitungsmaschine 14b ist als Aufsatz für die Gartengerätehandgriffvorrichtung 12b ausgebildet. Die Gartengerätehandgriffvorrichtung 12b und die Gartenbearbeitungsmaschine 14b sind in einem gekoppelten Zustand gemeinsam stabförmig ausgebildet. Die Gartengerätehandgriffvorrichtung 12b ist ebenfalls stabförmig ausgebildet. Die Gartengerätehandgriffvorrichtung 12b weist einen stabförmigen Grundkörper 46b auf. Der Grundkörper 46b weist entlang einer Haupterstreckungsrichtung 48b einen annähernd konstanten Querschnitt auf. Der Grundkörper 46b besteht im Wesentlichen aus Metall. Grundsätzlich wäre jedoch auch ein anderes, einem Fachmann als sinnvoll erscheinendes Material denkbar. An einem entlang der Haupterstreckungsrichtung 48b vorderen Ende des Grundkörpers 46b ist die Antriebseinheit 24b angeordnet. Die Antriebseinheit 24b schließt direkt an den Grundkörper 46b an. Die Antriebseinheit 24b wird von einem Akkumulator 106b mit Energie versorgt. Der Akkumulator 106b ist in dem Grundkörper 46b angeordnet. Der Akkumulator 106b ist in den Grundkörper 46b integriert.

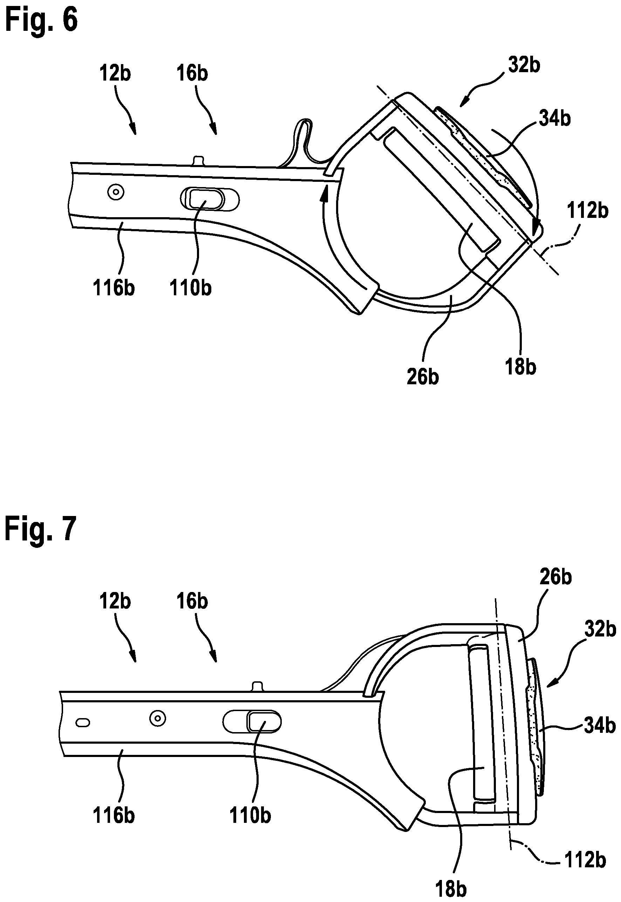

Ferner umfasst die Gartengerätehandgriffvorrichtung 12b eine Bedieneinheit 16b. Die Bedieneinheit 16b weist ein von einem Bediener betätigbares Bedienelement 18b auf. Das Bedienelement 18b ist als ein Druckschalter ausgebildet. Das Bedienelement 18b ist an einem Griff 26b der Gartengerätehandgriffvorrichtung 12b angeordnet. Der Griff 26b ist D-förmig ausgebildet. Grundsätzlich wäre jedoch auch eine andere, einem Fachmann als sinnvoll erscheinende Formgebung denkbar. Der Griff 26b ist auf einer der Antriebseinheit 24b abgewandten Seite der Gartengerätehandgriffvorrichtung 12b angeordnet. Der Griff 26b ist an einem der Antriebseinheit 24b abgewandten Ende der Gartengerätehandgriffvorrichtung 12b angeordnet. Das Bedienelement 18b ist an einer geraden Seite des D-förmigen Griffs 26b angeordnet. Das Bedienelement 18b erstreckt sich annähernd vollständig über eine Breite des Griffs 26b. Das Bedienelement 18b weist annähernd eine Handbreite auf. Ferner ist das Bedienelement 18b auf einer Innenseite des D-förmigen Griffs 26b angeordnet. Das Bedienelement 18b weist einen nicht weiter sichtbaren Schaltkontakt auf. Der Schaltkontakt ist infolge einer Betätigung des Bedienelements 18b schaltbar. Der Schaltkontakt des weiteren Bedienelements 20a ist dazu vorgesehen, ein als elektrische Kenngröße ausgebildetes Schaltsignal in Abhängigkeit einem Andrücken des Bedienelements 18b zu erzeugen. Der Schaltkontakt erzeugt bei einem Andrücken des Bedienelements 18b ein Betätigungsschaltsignal (Figur 6).

Des Weiteren weist die Bedieneinheit 16b ein von einem Bediener betätigbares weiteres Bedienelement 20b auf. Das weitere Bedienelement 20b ist als Griffbereich ausgebildet. Das weitere Bedienelement 20b ist stabförmig ausgebildet. Das weitere Bedienelement 20b bildet eine Grifffläche 58b. Ferner erstreckt sich das weitere Bedienelement 20b vollständig entlang einer Umfangserstreckung der Gartengerätehandgriffvorrichtung 12b. Das weitere Bedienelement 20b umgreift den Grundkörper 46b der Gartengerätehandgriffvorrichtung 12b in Umfangsrichtung, senkrecht zu der Haupterstreckungsrichtung 48b vollständig (Figur 5).

Über den Griff 26b kann eine Ausrichtung des Bedienelements 18b gegenüber dem weiteren Bedienelement 20b verändert werden. Der Griff 26b ist an einem Elektronikgehäuse 116b angeordnet. Das Elektronikgehäuse 116b schließt direkt an den Grundkörper 46b an. Das Elektronikgehäuse 116b schließt an einer der Antriebseinheit 24b angewandten Seite an den Grundkörper 46b an. Das Elektronikgehäuse 116b nimmt zumindest einen Teil einer Elektronik des Systems 10b auf. Der Griff 26b ist gegenüber dem Elektronikgehäuse 116b schwenkbar ausgebildet. Der Griff 26b ist gegenüber der Haupterstreckungsrichtung 48b des Grundkörper 46b verschwenkbar. Eine bauchige Seite des D-förmigen Griffs 26b ist dazu in dem Elektronikgehäuse 116b geführt und kann entlang dieser verdreht werden. In dem Elektronikgehäuse 116b ist nicht weiter sichtbar ein Fixiermechanismus integriert, über welchen eine Drehstellung des Griffs 26b fixiert werden kann. Der Fixiermechanismus kann über einen an dem Elektronikgehäuse 116b angeordneten Fixierschalter 110b gelöst werden. Fixierschalter 110b ist federbeaufschlagt, sodass dieser sich bei Nichtbetätigung automatisch in eine Fixierstellung bewegt. In Figur 7 ist eine Fixierstellung des Fixierschalters 110b gezeigt. In Figur 6 ist eine Lösestellung des Fixierschalters 110b gezeigt. In einer Lösestellung des Fixierschalters 110b kann der Griff 26b in einem begrenzten Winkelbereich verdreht werden. Hierdurch kann vorteilhaft eine Griffhaltung der Gartengerätehandgriffvorrichtung 12b verändert werden. Durch verdrehen des Griffs 26b wird zudem eine Griffachse 112b des Bedienelements 18b gegenüber einer Griffachse 114b des weiteren Bedienelements 20b verdreht (Figur 6, 7).

Ferner weist das System 10b eine Elektronikeinheit 22b auf. Die Elektronikeinheit 22b ist als Steuerelektronik ausgebildet. Die Elektronikeinheit 22b ist in dem Elektronikgehäuse 116b der Gartengerätehandgriffvorrichtung 12b angeordnet. Die Elektronikeinheit 22b ist dazu vorgesehen in Abhängigkeit einer Betätigung des Bedienelements 18b und des weiteren Bedienelements 20b zumindest eine Energieversorgung der Antriebseinheit 24b zu schalten.

Ferner weist das System 10b eine mit der Elektronikeinheit 22b verbundene Sensoreinheit 32b auf. Die Sensoreinheit 32b weist einen Kraftsensor, Wegesensor und/oder Bewegungsgeschwindigkeitssensor 34b auf. Der Kraftsensor, Wegesensor und/oder Bewegungsgeschwindigkeitssensor 34b ist mit der Elektronikeinheit 22b nicht weiter sichtbar verbunden. Der Kraftsensor, Wegesensor und/oder Bewegungsgeschwindigkeitssensor 34b ist an dem Griff 26b der Gartengerätehandgriffvorrichtung 12a angeordnet. Der Kraftsensor, Wegesensor und/oder Bewegungsgeschwindigkeitssensor 34b ist auf einer dem Bedienelement 18b abgewandten Seite der geraden Seite des Griffs 26b angeordnet. Der Kraftsensor, Wegesensor und/oder Bewegungsgeschwindigkeitssensor 34b ist zu einer Erfassung einer von einem Bediener auf die Gartengerätehandgriffvorrichtung 12b ausgeübten Kraft, Bewegungsstrecke und/oder Bewegungsgeschwindigkeit vorgesehen. Der Kraftsensor 34b erfasst sowohl eine Kraft mit welcher ein Bediener das Bedienelement 18b drückt, als auch eine Kraft, welche ein Bediener auf die gesamte Gartengerätehandgriffvorrichtung 12b. Über den Kraftsensor, Wegesensor und/oder Bewegungsgeschwindigkeitssensor 34b kann eine Geschwindigkeit und/oder ein Drehmoment der Antriebseinheit 24b gesteuert werden. Abhängig von einer auf den Kraftsensor, Wegesensor und/oder Bewegungsgeschwindigkeitssensor 34b ausgeübten Kraft, Bewegungsstrecke und/oder Bewegungsgeschwindigkeit wird von der Elektronikeinheit 22b eine Geschwindigkeit und/oder ein Drehmoment der Antriebseinheit 24b gesteuert.

Ferner weist die Gartengerätehandgriffvorrichtung 12b einen Betriebsschalter 108b auf. Der Betriebsschalter 108b ist an dem Elektronikgehäuse 116b angeordnet. Der Betriebsschalter 108b ist zumindest dazu vorgesehen, das Bedienelement 18b und das weitere Bedienelement 20b zu aktivieren und zu deaktivieren. Der Betriebsschalter 108b ist dazu vorgesehen, das gesamte System 10b zu aktivieren und zu deaktivieren. Über den Betriebsschalter 108b kann eine Energieversorgung des Akkumulators 106b unterbunden oder freigegeben werden. Der Betriebsschalter 108b ist als Schiebeschalter ausgebildet (Figur 5).

Nachfolgend wird ein Verfahren zu einem Betrieb sowie zu einer Bedienung des Systems 10b beschrieben. Bei dem Verfahren erfolgt in einigen Verfahrensschritten eine Reaktion der Elektronikeinheit 22b auf eine Betätigung des Bedienelements 18b in Abhängigkeit einer berührungsempfindlichen Kenngröße des weiteren Bedienelements 20b. Ferner führt die Elektronikeinheit 22b in Abhängigkeit einer Betätigungsabfolge des Bedienelements 18b oder des weiteren Bedienelements 20b eine teilweise automatische Schaltung einer Funktion der Gartenbearbeitungsmaschine 14b durch. Des Weiteren erfolgt in einem Verfahrensschritt in Abhängigkeit einer Betätigungsabfolge des Bedienelements 18b bezogen auf eine vorbestimmte Zeitdauer eine zumindest teilweise automatische Schaltung einer Funktion der Gartenbearbeitungsmaschine 14b.

Für einen Betrieb des Systems 10b muss sich der Betriebsschalter 108b in einer Aktivschaltstellung befinden. In einer Aktivschaltstellung des Betriebsschalters 108b wird das Verfahren mit einem Start 118b gestartet. Nach dem Start 118b wird in einem weiteren Schritt 120b ein Schaltsignal des weiteren Bedienelements 20b überprüft. Ist das weitere Bedienelement 20b nicht von einem Bediener umgriffen, startet das Verfahren von Beginn. Wird das weitere Bedienelement 20b von einem Bediener umgriffen, wird in einem nächsten Schritt 122b ein Schaltsignal des Bedienelements 18b überprüft. Ist das Bedienelement 18b nicht gedrückt, startet das Verfahren von Beginn. Wird das Bedienelement 18b von einem Bediener gedrückt, wird in einem weiteren Schritt 124b nochmals ein Schaltsignal des weiteren Bedienelements 20b überprüft. Ist das weitere Bedienelement 20b nicht von einem Bediener umgriffen, startet das Verfahren von Beginn. Ist das weitere Bedienelement 20b noch immer von einem Bediener umgriffen, wird in einem nächsten Schritt 126b geprüft, ob das Bedienelement 18b wieder losgelassen wurde. Ist das Bedienelement 18b noch immer gedrückt, wird Schritt 124b wiederholt. Wurde das Bedienelement 18b losgelassen, wird in einem weiteren Schritt 128b überprüft, ob das weitere Bedienelement 20b kontinuierlich von einem Bediener umgriffen wird und ob das Bedienelement 18b innerhalb von zwei Sekunden nochmals gedrückt wird. Dabei erfolgt in Abhängigkeit einer Betätigungsabfolge des Bedienelements 18b bezogen auf eine vorbestimmte Zeitdauer eine automatische Schaltung einer Funktion der Gartenbearbeitungsmaschine 14b. Ist dies nicht der Fall, startet das Verfahren von Beginn. Sind beide Bedingungen erfüllt, wird in einem darauffolgenden Schritt 130b die Antriebseinheit 24b gestartet. Nun wird in den Schritten 132b und 134b überprüft, ob das weitere Bedienelement 20b von einem Bediener umgriffen wird und das Bedienelement 18b von einem Bediener gedrückt wird. Wird das Bedienelement 18b oder das weitere Bedienelement 20b losgelassen, wird in einem nächsten Schritt 138b die Antriebseinheit 24b gestoppt und das Verfahren startet von Beginn. Wird das Bedienelement 18b von einem Bediener gedrückt und das weitere Bedienelement 20b von einem Bediener umgriffen, wird in einem Unterprogramm 136b über den Kraftsensor, Wegesensor und/oder Bewegungsgeschwindigkeitssensor 34b eine Geschwindigkeit und/oder ein Drehmoment der Antriebseinheit 24b gesteuert. Abhängig von einer auf den Kraftsensor, Wegesensor und/oder Bewegungsgeschwindigkeitssensor 34b ausgeübten Kraft, Bewegungsstrecke und/oder Bewegungsgeschwindigkeit, wird von der Elektronikeinheit 22b eine Geschwindigkeit und/oder ein Drehmoment der Antriebseinheit 24b gesteuert.

## Patentansprüche

1. Gartengerätehandgriffvorrichtung (12a; 12b), aufweisend einen stabförmigen Grundkörper der eine Haupterstreckungsrichtung aufweist, die wesentlich größer ist, als ein Umfang des Grundkörpers senkrecht zur Haupterstreckungsrichtung, insbesondere Verlängerungsstange, wobei die Gartengerätehandgriffvorrichtung (12a; 12b) insbesondere abnehmbar an einer Gartenbearbeitungsmaschine (14a; 14b) anordenbar ist, umfassend zumindest eine Bedieneinheit (16a; 16b), die zumindest ein von einem Bediener betätigbares Bedienelement (18a; 18b) und zumindest ein von einem Bediener betätigbares weiteres Bedienelement (20a; 20b) aufweist, und mit zumindest einer Elektronikeinheit (22a; 22b), die zumindest dazu vorgesehen ist, zumindest in Abhängigkeit einer Betätigung des Bedienelements (18a;18b) und des weiteren Bedienelements (20a; 20b) zumindest eine Energieversorgung einer Antriebseinheit (24a, 24b) zu schalten, wobei das weitere Bedienelement (20a; 20b) als elektronisches Bedienelement ausgebildet ist, **dadurch gekennzeichnet, dass** das weitere Bedienelement (20a, 20b) berührungsempfindlich ausgebildet ist und sich im Wesentlichen vollständig entlang einer Umfangserstreckung des stabförmigen Grundkörpers der Gartengerätehandgriffvorrichtung (12a; 12b) erstreckt.

2. Gartengerätehandgriffvorrichtung (12a; 12b) nach Anspruch 1, **dadurch gekennzeichnet, dass** das Bedienelement (18a; 18b) und/oder das weitere Bedienelement (20a; 20b) zumindest teilweise ergonomisch geformt, aktivierbar und/oder mit taktilen Flächen überzogen ist.

3. Gartengerätehandgriffvorrichtung (12a; 12b) nach Anspruch 1 oder 2, **dadurch gekennzeichnet, dass** die Gartengerätehandgriffvorrichtung eine Antriebseinheit aufweist, an welche die Gartenbearbeitungsmaschine direkt ankoppelbar ist.

4. Gartengerätehandgriffvorrichtung (12a; 12b) nach einem der vorhergehenden Ansprüche, **dadurch gekennzeichnet, dass** die zumindest eine Gartengerätehandgriffvorrichtung (12b) zumindest einen Griff (26b) aufweist, an welchem das Bedienelement (18b) angeordnet ist und über welches eine Ausrichtung des Bedienelements (18b) gegenüber dem weiteren Bedienelement (20b) verändert werden kann.

5. Gartengerätehandgriffvorrichtung (12a; 12b) nach einem der vorhergehenden Ansprüche, **dadurch gekennzeichnet, dass** die zumindest eine Elektronikeinheit (22a; 22b) zumindest einen Timer aufweist, der dazu vorgesehen ist, eine Dauer eines Schaltzustands des Bedienelements (18a; 18b) und/oder des weiteren Bedienelements (20a; 20b) zu überwachen, insbesondere wobei die Antriebseinheit (24a, 24b) automatisch deaktiviert wird, wenn das Bedienelement (18a; 18b) und/oder das weitere Bedienelement (20a; 20b) über einen definierten Zeitraum hinweg nicht berührt wird.

6. Gartengerätehandgriffvorrichtung (12a; 12b) nach einem der vorhergehenden Ansprüche, **gekennzeichnet durch** zumindest eine Lagereinheit (28a) und zumindest ein in der zumindest einen Lagereinheit (28a) integriertes Hauptschaltelement (30a), welches zumindest dazu vorgesehen ist, das Bedienelement (18a) und/oder das weitere Bedienelement (20a) zu aktivieren und/oder zu deaktivieren.

7. Gartengerätehandgriffvorrichtung (12a; 12b) nach einem der vorhergehenden Ansprüche, **gekennzeichnet durch** zumindest eine mit der zumindest einen Elektronikeinheit (22b) verbundene Sensoreinheit (32b), mit zumindest einem Kraftsensor, Wegesensor und/oder Bewegungsgeschwindigkeitssensor (34b) zu einer Erfassung einer von einem Bediener auf die Gartengerätehandgriffvorrichtung (12b) ausgeübten Kraft.

8. Gartengerätehandgriffvorrichtung (12a; 12b) nach einem der vorhergehenden Ansprüche, **gekennzeichnet durch** zumindest eine mit der zumindest einen Elektronikeinheit (22a) verbundene Sensoreinheit (32a), mit zumindest einem Beschleunigungssensor und/oder Lagesensor (36a) zu einer Erfassung einer Kenngröße einer Bewegung und/oder Lage der Gartengerätehandgriffvorrichtung (12a), vorzugsweise zu einer Erfassung eines Bewegungsbereichs der Gartengerätehandgriffvorrichtung, insbesondere um eine Ausrichtung und/oder eine Ausrichtungsänderung der Gartengerätehandgriffvorrichtung (12a; 12b) zu überwachen.

9. Gartengerätehandgriffvorrichtung (12a; 12b) nach Anspruch 8, **dadurch gekennzeichnet, dass** die Gartengerätehandgriffvorrichtung (12a; 12b) nur in einem definierten Bewegungsbereich oder Lagebereich, insbesondere in einem bevorzugten Anwendungswinkelbereich und/oder einstellbaren Bewegungsbereich arbeitet, bevorzugt wobei die Gartengerätehandgriffvorrichtung (12a; 12b) sofern sie aus einem sicheren Bewegungsbereich herausbewegt und/oder zu schnell bewegt wird, insbesondere automatisch deaktiviert wird und/oder ein Warnsignal ausgibt.

10. Gartengerätehandgriffvorrichtung (12a; 12b) nach einem der vorhergehenden Ansprüche, **dadurch gekennzeichnet, dass** die Elektronikeinheit (22a; 22b) dazu vorgesehen ist, zumindest in Abhängigkeit einer erfassten Bedienerbewegung auf dem Bedienelement (18a; 18b) und/oder dem weiteren Bedienelement (20a; 20b) zumindest eine von einer Aktivierung oder Deaktivierung der Energieversorgung der Antriebseinheit (24a; 24b) verschiedene Funktion der Gartenbearbeitungsmaschine (14a; 14b) zu schalten.

11. System aufweisend eine Gartengerätehandgriffvorrichtung (12a; 12b) nach einem der vorhergehenden Ansprüche und eine Gartenbearbeitungsmaschine (14a; 14b), insbesondere ausgebildet als Heckenschere, Kettensäge, Astsäge oder Gartenkralle.

12. Verfahren zu einer Bedienung einer Gartengerätehandgriffvorrichtung (12a; 12b) nach einem der Ansprüche 1-10 oder eines Systems (10a; 10b) nach Anspruch 11, **dadurch gekennzeichnet, dass** in zumindest einem Verfahrensschritt zumindest eine Reaktion der Elektronikeinheit (22a; 22b) auf eine Betätigung des Bedienelements (18a; 18b) in Abhängigkeit einer berührungsempfindlichen Kenngröße des weiteren Bedienelements (20a; 20b) erfolgt und/oder **dass** in zumindest einem Verfahrensschritt die Elektronikeinheit (22a; 22b) in Abhängigkeit einer Betätigungsabfolge des Bedienelements (18a; 18b) und/oder des weiteren Bedienelements (20a; 20b) eine zumindest teilweise automatische Schaltung einer Funktion der Gartenbearbeitungsmaschine (14a; 14b) durchführt.

13. Verfahren zumindest nach den Ansprüchen 8 und 12, **dadurch gekennzeichnet, dass** in zumindest einem Verfahrensschritt die Elektronikeinheit (22a) mittels des Beschleunigungssensors und/oder Lagesensors (36a) der Sensoreinheit (32a) eine Bewegung oder Lage der Gartengerätehandgriffvorrichtung (12a) erfasst und abhängig von einer Kenngröße einer Bewegung oder Lage zumindest eine Funktion der Gartenbearbeitungsmaschine (14a) aktiviert oder deaktiviert.

14. Verfahren zumindest nach den Ansprüchen 5 und 12, **dadurch gekennzeichnet, dass** in zumindest einem Verfahrensschritt die Elektronikeinheit (22a; 22b) bei einer Überschreitung einer Dauer eines Schaltzustands des Bedienelements (18a; 18b) und/oder des weiteren Bedienelements (20a; 20b) der Gartengerätehandgriffvorrichtung (12a; 12b) zumindest eine Funktion der Gartenbearbeitungsmaschine (14a; 14b) aktiviert oder deaktiviert.

15. Verfahren nach einem der Ansprüche 12 bis 14, **dadurch gekennzeichnet, dass** in zumindest einem Verfahrensschritt in Abhängigkeit einer Betätigungsabfolge des Bedienelements (18b) bezogen auf eine vorbestimmte Zeitdauer eine zumindest teilweise automatische Schaltung einer Funktion der Gartenbearbeitungsmaschine (14b) erfolgt.

## Claims

1. Garden implement handle device (12a; 12b), having a rod-type main body that has a direction of main extent that is substantially greater than an extent of the main body perpendicular to the direction of main extent, in particular extension rod, wherein the garden implement handle device (12a; 12b) can be disposed, in particular in a removable manner, on a garden care machine (14a; 14b), comprising at least one operating unit (16a; 16b), which has at least one operating element (18a; 18b) that can be actuated by an operator and at least one further operating element (20a; 20b) that can be actuated by an operator, and having at least one electronics unit (22a; 22b), which is designed, at least, to switch at least one energy supply of a drive unit (24a, 24b) at least in dependence on an actuation of the operating element (18a; 18b) and of the further operating element (20a; 20b), wherein the further operating element (20a; 20b) is realized as an electronic operating element, **characterized in that** the further operating element (20a, 20b) is realized so as to be touch-sensitive and extends substantially fully along a circumferential extent of the rod-type main body of the garden implement handle device (12a; 12b).

2. Garden implement handle device (12a; 12b) according to Claim 1, **characterized in that** the operating element (18a; 18b) and/or the further operating element (20a; 20b) are/is, at least partly, of an ergonomic shape, activatable and/or covered with tactile surfaces.

3. Garden implement handle device (12a; 12b) according to Claim 1 or 2, **characterized in that** the garden implement handle device has a drive unit, to which the garden care machine can be directly coupled.

4. Garden implement handle device (12a; 12b) according to one of the preceding claims, **characterized in that** the at least one garden implement handle device (12b) has at least one handle (26b) on which the operating element (18b) is disposed and by means of which an orientation of the operating element (18b) relative to the further operating element (20b) can be altered.

5. Garden implement handle device (12a; 12b) according to one of the preceding claims, **characterized in that** the at least one electronics unit (22a; 22b) has at least one timer, which is designed to monitor a duration of a switching state of the operating element (18a; 18b) and/or of the further operating element (20a; 20b), in particular wherein, if the operating element (18a; 18b) and/or the further operating element (20a; 20b) are/is not touched over and beyond a certain period of time, the drive unit (24a, 24b) is automatically deactivated.

6. Garden implement handle device (12a; 12b) according to one of the preceding claims, **characterized by** at least one storage unit (28a) and, integrated in the at least one storage unit (28a), at least one main switching element (30a) that is designed, at least, to activate and/or deactivate the operating element (18a) and/or the further operating element (20a).

7. Garden implement handle device (12a; 12b) according to one of the preceding claims, **characterized by** at least one sensor unit (32b) that is connected to the at least one electronics unit (22b) and that has at least one force sensor, path sensor and/or movement speed sensor (34b), for sensing a force exerted by an operator upon the garden implement handle device (12b).

8. Garden implement handle device (12a; 12b) according to one of the preceding claims, **characterized by** at least one sensor unit (32a) that is connected to the at least one electronics unit (22a) and that has at least one acceleration sensor and/or position sensor (36a) for sensing a characteristic quantity of a movement and/or position of the garden implement handle device (12a), preferably for sensing a movement range of the garden implement handle device, in particular to monitor an orientation and/or a change of orientation of the garden implement handle device (12a; 12b).

9. Garden implement handle device (12a; 12b) according to Claim 8, **characterized in that** the garden implement handle device (12a; 12b) works only in a defined movement range or position range, in particular in a preferred application angular range and/or settable movement range, preferably wherein the garden implement handle device (12a; 12b), if it is moved out of a safe movement range and/or is moved too rapidly, is in particular automatically deactivated and/or outputs a warning signal.

10. Garden implement handle device (12a; 12b) according to one of the preceding claims, **characterized in that** the electronics unit (22a; 22b) is designed to switch at least one function of the garden care machine (14a; 14b) that is other than an activation or deactivation of the energy supply of the drive unit (24a; 24b), at least in dependence on a sensed operator movement on the operating element (18a; 18b) and/or the further operating element (20a; 20b).

11. System having a garden implement handle device (12a; 12b) according to one of the preceding claims and a garden care machine (14a; 14b), in particular realized as a hedge trimmer, chainsaw, pruning saw or garden claw.

12. Procedure for operation of a garden implement handle device (12a; 12b) according to one of Claims 1-10 or a system (10a; 10b) according to Claim 11, **characterized in that**, in at least one procedure step, at least one reaction of the electronics unit (22a; 22b) to an actuation of the operating element (18a; 18b) is effected in dependence on a touch-sensitive characteristic quantity of the further operating element (20a; 20b), and/or **in that**, in at least one procedure step, the electronics unit (22a; 22b) effects an at least partly automatic switching of a function of the garden care machine (14a; 14b) in dependence on an actuation sequence of the operating element (18a; 18b) and/or of the further operating element (20a; 20b).

13. Procedure at least according to Claims 8 and 12, **characterized in that**, in at least one procedure step, the electronics unit (22a), by means of the acceleration sensor and/or position sensor (36a) of the sensor unit (32a), senses a movement or position of the garden implement handle device (12a) and activates or deactivates at least one function of the garden care machine (14a) in dependence on a characteristic quantity of a movement or position.

14. Procedure at least according to Claims 5 and 12, **characterized in that**, in at least one procedure step, the electronics unit (22a; 22b) activates or deactivates at least one function of the garden care machine (14a; 14b) if a duration of a switching state of the operating element (18a; 18b) and/or of the further operating element (20a; 20b) of the garden implement handle device (14a; 14b) is exceeded.

15. Procedure according to any one of Claims 12 to 14, **characterized in that**, in at least one procedure step, an at least partly automatic switching of a function of the garden care machine (14b) is effected in dependence on an actuation sequence of the operating element (18b), in relation to a predefined time period.

## Revendications

1. Dispositif de poignée pour outil de jardinage (12a ; 12b), présentant un corps de base en forme de barre qui présente une direction d'extension principale qui est nettement supérieure à une circonférence du corps de base perpendiculaire à la direction d'extension principale, en particulier une tige de rallonge, le dispositif de poignée pour outil de jardinage (12a ; 12b) pouvant être disposé, en particulier de manière amovible, sur une machine de jardinage (14a ; 14b), comprenant au moins une unité de commande (16a ; 16b) qui présente au moins élément de commande (18a ; 18b) pouvant être actionné par un utilisateur et au moins un autre élément de commande (20a ; 20b) pouvant être actionné par un utilisateur, et comprenant au moins une unité électronique (22a ; 22b) qui est prévue pour commuter au moins une alimentation en énergie d'une unité d'entraînement (24a, 24b) au moins en fonction d'un actionnement de l'élément de commande (18a ; 18b) et de l'autre élément de commande (20a ; 20b), l'autre élément de commande (20a; 20b) étant réalisé comme un élément de commande électronique,
**caractérisé en ce que** l'autre élément de commande (20a, 20b) est réalisé de manière tactile et s'étend de manière substantiellement complète le long d'une extension circonférentielle du corps de base en forme de barre du dispositif de poignée d'outil de jardinage (12a ; 12b).

2. Dispositif de poignée pour outil de jardinage (12a ; 12b) selon la revendication 1, **caractérisé en ce que** l'élément de commande (18a ; 18b) et/ou l'autre élément de commande (20a ; 20b) sont formés de manière au moins partiellement ergonomique, peuvent être activés et/ou sont recouverts de surfaces tactiles.

3. Dispositif de poignée pour outil de jardinage (12a ; 12b) selon la revendication 1 ou 2, **caractérisé en ce que** le dispositif de poignée pour outil de jardinage présente une unité d'entraînement avec laquelle la machine de jardinage peut être couplée directement.

4. Dispositif de poignée pour outil de jardinage (12a ; 12b) selon l'une quelconque des revendications précédentes, **caractérisé en ce que** ledit au moins un dispositif de poignée d'outil de jardinage (12b) présente au moins une poignée (26b) sur laquelle est disposé l'élément de commande (18b) et par laquelle une orientation de l'élément de commande (18b) par rapport à l'autre élément de commande (20b) peut être modifiée.

5. Dispositif de poignée pour outil de jardinage (12a ; 12b) selon l'une quelconque des revendications précédentes, **caractérisé en ce que** ladite au moins une unité électronique (22a ; 22b) présente au moins une minuterie qui est prévue pour surveiller une durée d'un état de commutation de l'élément de commande (18a ; 18b) et/ou de l'autre élément de commande (20a ; 20b), l'unité d'entraînement (24a, 24b) étant en particulier désactivée automatiquement si l'élément de commande (18a ; 18b) et/ou l'autre élément de commande (20a; 20b) ne subit/subissent aucun contact pendant une période définie.

6. Dispositif de poignée pour outil de jardinage (12a ; 12b) selon l'une quelconque des revendications précédentes, **caractérisé par** au moins une unité de palier (28a) et au moins un élément de commutation principal (30a) intégré dans ladite au moins une unité de palier (28a) qui est prévu au moins pour activer et/ou pour désactiver l'élément de commande (18a) et/ou l'autre élément de commande (20a).

7. Dispositif de poignée pour outil de jardinage (12a ; 12b) selon l'une quelconque des revendications précédentes, **caractérisé par** au moins une unité de capteur (32b) reliée à ladite au moins une unité électronique (22b), comprenant au moins un capteur de force, un capteur de déplacement et/ou un capteur de vitesse de déplacement (34b) pour détecter une force exercée par un utilisateur sur le dispositif de poignée d'outil de jardinage (12b).

8. Dispositif de poignée pour outil de jardinage (12a ; 12b) selon l'une quelconque des revendications précédentes, **caractérisé par** au moins une unité de capteur (32a) reliée à ladite unité électronique (22a), comprenant au moins un capteur d'accélération et/ou un capteur de position (36a) pour détecter une grandeur caractéristique d'un mouvement et/ou d'une position du dispositif de poignée pour outil de jardinage (12a), de préférence pour détecter une zone de mouvement du dispositif de poignée pour outil de jardinage, en particulier pour surveiller une orientation et/ou un changement d'orientation du dispositif de poignée pour outil de jardinage (12a ; 12b).

9. Dispositif de poignée pour outil de jardinage (12a ; 12b) selon la revendication 8, **caractérisé en ce que** le dispositif de poignée pour outil de jardinage (12a ; 12b) ne fonctionne que dans une zone de mouvement ou une zone de position définie, en particulier dans une zone angulaire d'application préférée et/ou une zone de mouvement réglable, de préférence le dispositif de poignée pour outil de jardinage (12a ; 12b) étant désactivé, en particulier automatiquement, et/ou émettant un signal d'avertissement dans la mesure où il quitte une zone de mouvement sécurisée et/ou bouge trop vite.

10. Dispositif de poignée pour outil de jardinage (12a ; 12b) selon l'une quelconque des revendications précédentes, **caractérisé en ce que** l'unité électronique (22a ; 22b) est prévue pour commuter au moins une fonction autre qu'une activation ou désactivation de l'alimentation en énergie de l'unité d'entraînement (24a ; 24b) de la machine de jardinage (14a ; 14b) au moins en fonction d'un mouvement d'utilisateur détecté au niveau de l'élément de commande (18a ; 18b) et/ou de l'autre élément de commande (20a ; 20b).

11. Système présentant un dispositif de poignée pour outil de jardinage (12a ; 12b) selon l'une quelconque des revendications précédentes et une machine de jardinage (14a ; 14b) réalisée en particulier sous la forme d'un taille-haie, d'une tronçonneuse, d'une scie à élaguer ou d'une griffe de jardinage.

12. Procédé permettant de commander un dispositif de poignée pour outil de jardinage (12a ; 12b) selon l'une quelconque des revendications 1 à 10 ou un système (10a ; 10b) selon la revendication 11,
**caractérisé en ce que** dans au moins une étape de procédé, au moins une réaction de l'unité électronique (22a ; 22b) à un actionnement de l'élément de commande (18a ; 18b) a lieu en fonction d'une grandeur caractéristique tactile de l'autre élément de commande (20a ; 20b), et/ou **en ce que** dans au moins une étape de procédé, l'unité électronique (22a ; 22b) effectue une commutation au moins partiellement automatique d'une fonction de la machine de jardinage (14a ; 14b) en fonction d'une séquence d'actionnement de l'élément de commande (18a ; 18b) et/ou de l'autre élément de commande (20a ; 20b).

13. Procédé au moins selon les revendications 8 et 12, **caractérisé en ce que** dans au moins une étape de procédé, l'unité électronique (22a) détecte au moyen du capteur d'accélération et/ou du capteur de position (36a) de l'unité de capteur (32a) un mouvement ou une position du dispositif de poignée pour outil de jardinage (12a), et active ou désactive au moins une fonction de la machine de jardinage (14a) en fonction d'une grandeur caractéristique d'un mouvement ou d'une position.

14. Procédé au moins selon les revendications 5 et 12, **caractérisé en ce que** dans au moins une étape de procédé, en cas de dépassement d'une durée d'un état de commutation de l'élément de commande (18a ; 18b) et/ou de l'autre élément de commande (20a ; 20b) du dispositif de poignée d'outil de jardinage (12a ; 12b), l'unité électronique (22a ; 22b) active ou désactive au moins une fonction de la machine de jardinage (14a ; 14b).

15. Procédé selon l'une quelconque des revendications 12 à 14, **caractérisé en ce que** dans au moins une étape de procédé, une commutation au moins partiellement automatique d'une fonction de la machine de jardinage (14b) a lieu en fonction d'une séquence d'actionnement de l'élément de commande (18b) par rapport à une période prédéterminée.
